# EUROPEAN PATENT APPLICATION

(11) **EP 1 777 323 A2**
(43) Date of publication of application: **25.04.2007**
(21) Application number: 05021665.4
(22) Date of filing: 23.03.1998
(51) Int. Cl.: C25B 1/00

(54) **An integrated ozone generator system**

(30) Priority: 21.03.1997 US 821419; 31.03.1997 US 829604; 05.01.1998 US 2754
(62) Divisional of application: 98913081.0
(71) Applicant: Lynntech, Inc., College Station, TX 77840 (US)
(72) Inventor: Andrews, Craig C., College Station TX 77840 (US); Murphy, Oliver J., Bryan TX 77802 (US); Rogers, Thomas D., Wheelock TX 77882 (US)
(74) Representative: Lockey, Robert Alexander

(57) **Abstract**

An electrochemical cell comprises a rigid anode formed of expanded metal sheet and a porous metal substrate between the expanded metal sheet and a proton exchange membrane and a cathode formed from an expanded metal sheet adjacent a rigid perforated metal sheet, there being a sheet of compressible stainless steel felt or wool between the perforated metal sheet and the proton exchange membrane.

## Description

### BACKGROUND OF THE INVENTION

### Field of the Invention

This invention relates to the production of ozone for use in a variety of processes such as decontamination of water. More specifically, the invention relates to an electrochemical cell and a process for generating ozone in the electrochemical cell.

### Background of the Related Art

Ozone has long been recognized as a useful chemical commodity valued particularly for its outstanding oxidative activity. Because of this activity, it finds wide application in disinfection processes and the removal of cyanides, phenols, iron, manganese, and detergents. Thus, ozone has widespread application in many diverse activities, and its use would undoubtedly expand if its cost of production could be reduced. In addition, since ozone is explosive when concentrated as either a gas or liquid, or when dissolved into solvents or absorbed into cells, its transportation is potentially hazardous. Therefore, its is generally manufactured on the site where it is used. However, the cost of generating equipment, and poor energy efficiency of production has deterred its use in many applications and in many locations.

Ozone may be produced by an electrolytic process, wherein an electric current (normally D.C.) is impressed across electrodes immersed in an electrolyte, i.e., electrically conducting, fluid. The electrolyte includes water, which, in the process dissociates into its respective elemental species, O₂ and H₂. Under the proper conditions, the oxygen is also evolved as the O₃ species. The evolution of O₃ may be represented as:

3H₂O=O₃ + 3H₂; ΔH° ₂₉₈ =207.5 kcal

However, to date, the necessary high yields have not been realized in any forseeably practical electrolytic system.

Furthermore, because ozone gas has a very short life, it is preferably generated in close proximity to where the ozone will be consumed and at a rate substantially equal to the rate of consumption. Because so many of the present applications for ozone deal with the oxidation of contaminants in water streams, air streams and soil, it is typically impractical to bring the contaminant to a centralized ozone processing plant. Rather, it is imperative that the ozone be generated at the site of the contamination. This may be an active or abandoned industrial site or a remote location where little or no utilities are available. Furthermore, the rate of ozone consumption will vary according to the type of decontamination process and the nature of the site itself.

Unfortunately, there has been very little attention given to the development of self-contained and self-controlled support systems and utilities for ozone producing electrochemical cells. In order for these systems to be commercially successful, the systems must be reliable, require low maintenance, operate efficiently and be able to operate on standard mains electricity. Furthermore, these objectives must be met while providing a simple system that can be used to decontaminate a site in a cost-effective manner.

Therefore, there is a need for an ozone generator system that operates efficiently on standard AC electricity and water to deliver a steady and reliable stream of ozone gas. It would be desirable if the system was self-contained, self-controlled and required very little maintenance. It would be further desirable if the system could provide a continuous supply of ozone at a rate dependent upon demand.

There is also a need for an ozone generator system that operates efficiently on standard AC or DC electricity and water to deliver a reliable stream of ozone gas that is generated under pressure for direct use in a given application. Still other applications would benefit from a stream of highly concentrated ozone that is already dissolved in water where it may be used directly or diluted into a process stream so that a target ozone concentration may be achieved. It would be desirable if the ozone generator system was self-contained, self-controlled and required very little maintenance. It would be further desirable if the system had a minimum number of moving or wearing components, a minimal control system, and was compatible with low voltage power sources such as solar cell arrays, vehicle electrical systems, or battery power.

### SUMMARY OF THE INVENTION

The present invention provides an ozone generating system that includes one or more electrolytic cells comprising an anode flowfield or chamber and a cathode flowfield or chamber. The system also includes an anode reservoir in fluid communication with the anode flowfield, the anode reservoir comprising a gas discharge valve; and a cathode reservoir in fluid communication with the cathode flowfield, the cathode reservoir comprising a gas discharge valve. The anode and cathode reservoirs may comprise a water inlet port. The anode reservoir preferably comprises a water cooling member in thermal communication with the anode reservoir and a water recirculating member. The anode reservoir may comprise a stand pipe having a small hole for equalizing water levels in the stand pipe and the anode reservoir. The anode reservoir may be in fluid communication through a control valve to the cathode reservoir. The system may further comprise a pump having an inlet in fluid communication with the anode reservoir and an outlet in fluid communication with the anode. The anode reservoir is preferably elevated above the anode flowfield and the anode reservoir inlet preferably communicates with the top of the anode flowfield. A system controller may be included in the system and be programmed to operate the anode reservoir gas discharge valve based on the water level in the anode reservoir. The system controller may also be programmed to operate a cathode reservoir gas discharge valve based on the water level in the cathode reservoir.

In another aspect of the invention, a process for generating ozone is provided comprising the steps of: electrolyzing water in one or more electrolytic cells comprising an anode flowfield and a cathode flowfield which separate ozone and oxygen from hydrogen; recirculating water between the anode flowfield and an anode reservoir; separating ozone and oxygen from water in the anode reservoir; discharging oxygen and ozone from the anode reservoir; receiving water from the cathode flowfield in a cathode reservoir; separating hydrogen from water in the cathode reservoir; discharging hydrogen from the cathode reservoir; and adding water to each reservoir as needed to maintain continuous production of ozone. The process may also include cooling water in the anode reservoir. It is preferred that water from the anode flowfield be recirculated to the anode reservoir through a stand pipe in the anode reservoir. A preferred stand pipe has a small hole at its base for equalizing water levels. Water can be added to the anode reservoir from the cathode reservoir. The anode reservoir and cathode reservoir may be operated at the same or different pressures and be maintained at separate setpoint pressures and a substantially constant water level. Most preferably, the anode reservoir operates at lower pressure than the cathode reservoir, such as about 30 psig (206.8 kN/m²) (206.8 kN/m²) and about 40 psig (275.7 kN/m²), respectively. A gas stream comprising between about 10% and about 18% by weight of ozone is discharged from the anode reservoir.

The ozone generator may comprise: one or more electrolytic cells comprising an anode and cathode; a power supply electronically coupled to the electrolytic cells; an anode reservoir in fluid communication with the anode, the anode reservoir comprising a gas releasing member; a recirculating member in fluid communication between the anode reservoir and the anode; a cathode reservoir in fluid communication with the cathode; a system controller in electronic communication with the power supply, the recirculating member, and the anode gas releasing member; and a memory device coupled to the system controller, the memory device comprising a readable program code for selecting a process comprising the steps of electrolyzing water in the electrolytic cells, recirculating water between the anode cell and the anode reservoir, separating ozone and oxygen from water in the anode reservoir, discharging oxygen and ozone from the anode reservoir, receiving water from the cathode cell in the cathode reservoir, and adding water from the cathode reservoir to the anode reservoir as needed to maintain continuous production of ozone. The ozone generator may further comprise a cooling member disposed in thermal communication with the water in the anode reservoir and/or a battery backup in electronic communication with the electrolytic cells.

The present invention provides an ozone generating and delivery system that includes one or more electrolytic cells comprising an anode and a cathode. The system also includes an anode reservoir in fluid communication with the anode. The anode reservoir may comprise a water inlet and outlet port(s) for filling the reservoir with fresh water and discharging ozone saturated water. The anode reservoir may comprise a hydrophobic membrane at the top of the reservoir to allow ozone and oxygen gas to escape the anode reservoir while water is retained within the reservoir. The anode reservoir may be in thermal communication with a cooling member, such as a thermoelectric device, mechanical refrigeration unit or heat sink, for removing waste heat from the system. The anode is preferably in direct contact with the water in the anode reservoir allowing the free exchange of water with the reservoir and the transmission of gas from the anode to the anode reservoir. A water source providing deionized, reverse osmosis, distilled or other suitable water supply may be placed in fluid communication with the anode reservoir, preferably through a backflow prevention device. Alternatively, the anode may be operated in a self pressurizing mode so that when the anode pressure is momentarily relieved, the pressure of the water source is allowed to overcome the anode pressure and fill the anode reservoir with water, after which the anode relief is closed and the anode is again self pressurized through the generation of gas. The anode reservoir pressure may be held above the pressure of the water source by using a backflow prevention device or valve between the water source and the anode reservoir. In this manner, the pressure within the anode reservoir may be elevated to any desired pressure up to the design pressure of the hardware.

The ozone generator system may comprise: one or more electrolytic cells comprising of an anode and cathode; a power supply electronically coupled to the electrolytic cells; a battery back-up to the electrolytic cells to improve the lifetime of the anode electrocatalyst and provide rapid response to ozone demand; an anode reservoir in fluid communication with the anode and an anode gas releasing mechanism consisting of a porous hydrophobic membrane; a cathode in fluid communication with a cathode gas releasing mechanism consisting of a porous hydrophobic membrane; a recycle line for returning cathode water to the anode; and a cooling member for removing waste heat from the system.

Another aspect of the invention provides a waste gas destruction system which utilizes a catalyst to combine the hydrogen with oxygen from the air to consume the hydrogen without a flame and generate waste heat. In addition to other processes which may utilize this high-grade, contaminant free, waste heat, this hydrogen destruct system may be in thermal communication with an ozone destruction system comprising of a catalyst suitable for the conversion of ozone into diatomic oxygen.

In another aspect of the invention, a process for generating and delivering ozone is provided comprising the steps of: electrolyzing water in one or more electrolytic cells to generate a combination of oxygen and ozone at the anode and hydrogen at the cathode; utilizing a natural means of circulation, such as gas lift, gas forced and thermal, to circulate water between reservoirs and the electrolytic cells; separating the ozone/oxygen gas from the anode water using a porous hydrophobic membrane; receiving hydrogen gas and water from the cathode; phase separating the hydrogen from the cathode water; returning the water originally transferred from the anode to the cathode through electroosmosis back to the anode; separating and discharging the hydrogen gas using a porous hydrophobic membrane which eliminates the requirements for mechanical valves or a control system; adding water to the anode on a continuous or periodic basis to maintain the water supply, self pressurizing the system allowing the delivery of pressurized oxygen/ozone, hydrogen, and oxygen/ozone saturated water. Other beneficial steps may be taken, including: operating the system at elevated pressures to dissolve higher levels of ozone into solution, and to deliver ozone gas and ozonated water under pressure to eliminate further pumping; removing waste heat from the system and lowering the system temperature to dissolve more ozone into the water and increase the ozone lifetime; destroying the surplus ozone and hydrogen so that the system may be operated in an enclosed environment without necessitating venting; using the waste heat from the hydrogen destruction to enhance the catalytic destruction of the ozone; and/or utilizing the high grade waste heat from the entire gas destruct unit to provide heating to another process.

The present invention provides an ozone generation and delivery system comprising an electrochemical cell having an anode and a cathode, a cathode reservoir in communication with the cathode, and a cooling member disposed in thermal communication with the cathode reservoir. The cathode may form a portion of the cathode reservoir. Where the cathode reservoir is a cathode phase separator chamber, it may include a gas outlet port disposed in a top portion of the cathode phase separator chamber, with the cathode disposed in a bottom portion of the cathode phase separator chamber. Furthermore, the cathode phase separator chamber should provide fluid communication with the cathode allowing the free exchange of water and gas bubbles between the cathode and the cathode phase separator chamber. The ozone generation and delivery system may further comprise an anode reservoir in fluid communication with the anode, a water source in fluid communication with the cathode reservoir, a water source in fluid communication through a backflow prevention device to the anode reservoir, and/or a pressure control device in the gas outlet port. Optionally, the anode reservoir may comprise a liquid reservoir, a gas outlet port located at the top of the reservoir and a porous hydrophobic membrane disposed over the gas outlet port, wherein the porous hydrophobic membrane of the anode reservoir allows gas to be separated from water while the water is contained under pressure. The system may also comprise a recycle line providing fluid communication from the cathode phase separator to the anode reservoir, perhaps with a backflow prevention device in the recycle line. Preferably, the recycle line has a sufficiently small diameter to prevent dissolved ozone from diffusing from the anode reservoir to the cathode phase separator. It is also preferable that the cathode and anode are separated by a proton exchange membrane. The system may comprise a pressure regulating member disposed in the gas outlet. Additionally, the anode reservoir may further comprises a water outlet near the base of the anode reservoir.

The present invention also provides an ozone generation and delivery system comprising a plurality of electrochemical cells, each cell having an anode and a cathode, and further comprising an anode reservoir in communication with the anodes, the anode reservoir preferably comprising a gas outlet port and a porous hydrophobic membrane disposed over the gas outlet port. The plurality of electrochemical cells are preferably placed in a filter press arrangement, but may also be placed with the anodes forming a portion of the anode reservoir.

Additionally, the present invention provides an electrochemical method of generating and delivering ozone, comprising the steps of (a) electrolyzing water in one or more electrolytic cells to generate ozone in water at the anode and a cathodic product in water at the cathode; (b) circulating water between the cathode and the cathode reservoir, and (c) cooling water in the cathode reservoir. The hydrogen gas may be separated from the cathode water using a porous hydrophobic membrane disposed in the cathode phase separator. The method may further comprise back diffusing water from the cathode through a proton exchange membrane to the anode, wherein the proton exchange membrane is disposed between the cathode and anode. Further, the method may comprise delivering ozone gas from the anode under pressure and/or delivering the anode water from the anode reservoir under pressure. The method may also include destroying surplus ozone and hydrogen.

Another aspect of the present invention provides an electrochemical cell, comprising a compressible electrode, a rigid electrode, and a proton exchange membrane compressed between the compressible electrode and the rigid electrode. Preferably, the compressible electrode and rigid electrodes contain a fluid, wherein the fluid in the compressible electrode is under greater pressure than the fluid in the rigid electrode. The electrochemical cell may further comprise a rigid support member behind the compressible electrode reducing the compression on the compressible electrode.

Finally, the present invention provides a method of operating an electrochemical cell, comprising: (a) providing a reactant to an electrode at a flowrate substantially equal to consumption of the reactant, and (b) periodically flushing the electrode with the reactant at a flowrate substantially greater that consumption of the reactant to remove compounds accumulated on the electrode. Optionally, the method may further comprise (c) monitoring the flowrate of reactant into the electrode.

### BRIEF DESCRIPTION OF THE DRAWINGS

So that the above recited features and advantages of the present invention can be understood in detail, a more particular description of the invention, briefly summarized above, may be had by reference to the embodiments thereof which are illustrated in the appended drawings. It is to be noted, however, that the appended drawings illustrate only typical embodiments of this invention and are therefore not to be considered limiting of its scope, for the invention may admit to other equally effective embodiments.

Figure 1 is a schematic diagram of a self-controlled ozone generator which operates solely on electricity and distilled water.

Figure 2 is a schematic diagram of an alternate ozone generator which operates without a controller, valves or level sensors.

Figure 3 is an exploded perspective view of an electrolytic cell for the production of ozone.

Figure 4 is a front view of a cell frame suitable for use in the electrolytic cell of Figure 2.

Figure 5 is a schematic diagram of an entirely passive ozone generation and delivery system which operates solely on water and a source of electrical power.

Figure 6 is an exploded schematic diagram of an electrochemical cell with the anode forming the floor of the anode reservoir.

Figure 7 is a cross-sectional view of an alternate electrochemical cell having multiple anodes and cathodes positioned side by side while being wired electrically in series.

Figure 8 is a face view of the electrodes and support plate shown in Figure 3.

Figure 9 is a cross-sectional view of the electrolytic cell shown in Figure 3.

Figure 10 is a schematic diagram of an entirely passive ozone generation system with an alternative electrochemical cell 120 configured in a filter press type arrangement.

Figure 11 is a cross-sectional view of the alternative electrochemical cell 120 which is configured in a filter press type arrangement.

Figure 12 is a schematic diagram of a self-pressurizing ozone generation and delivery system.

Figures 13A and 13B show a suitable constant current power supply having three output levels to supply power to the electrolyzer.

Figure 14 is a schematic diagram of a self-controlled ozone generator and delivery system having its cooling member disposed in the cathode reservoir.

Figure 15 is a schematic diagram of a passive ozone generator which operates without a solenoid controller, solenoid valves or level sensors.

Figure 16 is an exploded view of an electrochemical cell stack suitable for the production of ozone.

Figure 17 is a face view of a cell frame shown in Figure 16.

Figure 17a is a cross-sectional view of a frame formed around several components of a cell.

Figure 17b is a cross-sectional view of an alternate frame formed around several components of a cell.

Figure 18 is a schematic diagram of a passive ozone generator that operates without an anode reservoir.

Figure 19 is a schematic diagram of a passive ozone generator that operates without an anode reservoir and relies upon back diffusion of water from the cathode to the anode.

Figure 20 is a schematic diagram of a passive ozone generator that operates without an anode reservoir and supplies water to a tubulated proton exchange membrane.

Figure 21 is a cross-sectional view of an ozone engaging system with baffles to provide counter-current flow of ozone into water.

Figure 22 is a cross-sectional view of another ozone engaging system with internal hydrophobic membranes and external water flow members.

Figure 23 is a partial schematic diagram of an ozone generator having an orifice disposed between the cathode reservoir and the anode and an anode flushing system.

Figure 24 is an integrated ozone disengagement and re-engagement system 230.

### DETAILED DESCRIPTION OF THE INVENTION

The present invention provides an ozone generator useful for supplying ozone to many industrial processes such as the photocatalytic oxidation of organic compounds in a non-organic solvent such as groundwater. The ozone generator includes one or more electrolytic cells comprising an anode, a cathode and a proton exchange membrane (PEM) disposed between the anode and cathode. The PEM is not only proton conducting, but also electronically insulating and gas impermeable to maintain separation of ozone and oxygen gases generated at the anode from hydrogen or other gases generated at the cathode. The ozone generator also comprises an anode reservoir having a gas discharge valve for venting oxygen and ozone, a recirculating member for recirculating water between the anode reservoir and the anode flowfield, and, optionally, a cooling member for cooling water in the anode reservoir. The ozone generator further comprises a cathode reservoir having a gas discharge valve for venting gases produced at the cathode. While both reservoirs may have a separate water filling port, it is preferred that the reservoirs communicate through an isolation valve so that the anode reservoir can be filled from the cathode reservoir while continuing to produce ozone. The ozone generator is readily configured for self-control using a system controller programmed to generate ozone while operating the anode reservoir and the cathode reservoir at constant pressures.

The ozone source preferably generates a gas stream comprising from about 10% to about 18% by weight of ozone in oxygen. Such electrolytic cells, including depolarizing electrolytic cells, are described in US Patent No. 5,460,705 which description is incorporated by reference herein. A fully self-controlled electrolytic cell for producing ozone is most preferred for use at remote locations such as a groundwater treatment facility.

In one aspect of the present invention, the anode reservoir comprises a cooling member which cools the water in the reservoir. Since the cooled water is recirculated to the anode compartment, the electrolytic cell is maintained at a temperature below about 30°C, where the cell operates most efficiently. Without the cooling member, the electrical resistances in the electrolytic cell generate heat that increases the temperature of the cell and effects the cell operation.

In yet another aspect of the present invention, the ozone generator is provided with an ozone destruction unit or "ozone destruct". The ozone destruct is disposed in communication with the ozone discharge of the anode reservoir. The amount of ozone that is produced and separated, but not used by some ozone consuming process, is catalytically destroyed on contact. The ozone destruct comprises a catalyst, such as Fe₂O₃, MnO₂ or a noble metal (e.g., platinum and palladium), most preferably MnO₂ or platinum.

Another aspect of the invention provides a simplified anode reservoir in which the ozone control valve and level sensor are eliminated. The simplified anode reservoir comprises a membrane that selectively allows the passage of ozone and oxygen gas while retaining water. The membrane is preferably a porous polytetrafluoroethylene (PTFE) membrane, available from W.L. Gore & Associates, Inc., Elkton, Maryland under the trade name GORETEX®. The simplified anode reservoir also allows eliminates the need for a shut off valve in the tubing that connects the anode and cathode reservoirs. Without the shut off valve, water from the cathode reservoir flows freely to the anode reservoir to keep the anode reservoir full of water.

Yet another aspect of the present invention provides an electrolytic cell that efficiently produces ozone. The electrolytic cell uses a proton exchange membrane (PEM), such as a perfluorinated sulfonic acid polymer sheet, in intimate contact between the anode and cathode catalysts. The anode and cathode catalysts are also in intimate contact with an anode flowfield and a cathode flowfield, respectively. The flowfields make electrical contact with either a bipolar plate disposed between each cell or a current collector plate at the two ends of the cell stack. The anode flowfield is preferably made from a valve metal such as titanium. However, because the valve metals become embrittled from exposure to hydrogen, the cathode flowfield is preferably made from a metal other than the valve metals, such as stainless steel, nickel, copper or combinations thereof.

Another aspect of the invention provides anode and cathode flowfields each comprising a first region adjacent the PEM that is flat, smooth and porous and a second region that is more open and provides a low-resistance flow path therethrough. The first region provides substantially continuous and even support of the membrane and electrocatalysts so that the membrane and electrocatalysts are not damaged when the cell stack is compressed. The preferred anode flowfield has a first region made of porous, sintered titanium and a second region made of rolled, expanded titanium with each sheet rotated 90 degrees from the next sheet. The anode catalyst, such as lead dioxide (PbO₂), may be deposited either on the porous, sintered titanium surface of the anode flowfield or the surface of the PEM. The preferred cathode flowfield has a first region made of stainless steel felt or wool and porous stainless steel and a second region made of rolled, expanded stainless steel. Where the second regions are made of expanded metal, it is preferred that at least two sheets of the expanded metal be used and that each of the sheets be turned relative to the previous sheet, most preferably at about 90 degrees. The use of multiple expanded metal sheets substantially eliminates blockages to fluid flow that can occur with a single expanded metal sheet.

Because stainless steel felt can be so easily compressed, a most preferred cathode flowfield comprises stainless steel felt, at least two sheets of rolled expanded stainless steel, and a rigid perforated stainless steel sheet disposed between the felt and the expanded stainless steel. The preferred rigid perforated stainless steel sheet has holes therethrough which are larger than the passages in the felt and smaller than the openings in the expanded stainless steel. The rigid perforated stainless steel sheet provides support for the stainless steel felt and prevents the rolled expanded stainless steel sheet from damaging the stainless steel felt.

The use of a felt, such as stainless steel or titanium, provides the membrane with physical support but is less rigid than a frit and can conform to the membrane or a frit on the opposing side of the membrane. The compressibility of the felt prevents gross distortions or other damage to the membrane while maintaining good contact and support. While felt could be utilized on both sides of the cell, it is generally preferred that felt only be used on one side, either the anode or cathode. However, because the felt is less rigid than a frit, it is preferred that the felt be used on the high pressure side of the cell to avoid collapsing the felt.

The present invention provides an ozone generation and delivery system that lends itself to small scale applications. While the present ozone generators may also be made quite large, the generators may be made quite small and compact for point-of-use production of ozone. The ozone generators are simple to operate and require very low maintenance.

In one aspect of the invention, an anode reservoir is provided with a hydrophobic membrane to allow phase separation of the oxygen and ozone gases produced at the anode from water. The hydrophobic membrane eliminates the need for a complicated system of valves and level indicators, thereby reducing potential breakdowns and maintenance. Another benefit of using hydrophobic membranes in the anode reservoir is that the reservoir may be completely full of water, thereby making the most efficient use of the size of the reservoir. The hydrophobic membranes used in the present invention include any membrane that is ozone resistant, gas permeable and water resistant. Examples of useful hydrophobic membranes include porous polytetrafluoroethylene (PTFE) and porous metals or ceramics impregnated with fluorinated polymers.

In another aspect of the invention, a cathode phase separator is provided with a hydrophobic membrane to allow phase separation of hydrogen gas produced at the cathode from water electroosmotically transported to the cathode. The hydrophobic membrane is disposed in the cathode phase separator above the hydrogen-containing water coming from the cathode. The cathode phase separator may be located independent of the electrolytic cell(s) or anode reservoir, thereby providing flexibility in the configuration and dimensions of the overall system.

In yet another aspect of the invention, the anode reservoir may be coupled to the anode so that the face of the anode is in direct fluid communication with the anode reservoir and water and gases may flow freely therebetween. Direct fluid communication allows the ozone produced at the anode to pass into the anode reservoir without passing through a system of tubes and manifolds which inherently cause the coalescence of ozone bubbles. The formation and separation of micro-bubbles at the anode enhances the dissolution of ozone into the anode water and increases the ozone storage capacity of the anode reservoir. An additional advantage of coupling the anode directly to the anode reservoir is the efficient removal of waste heat from the anode. The anode is cooled by natural circulation caused by the rising gas bubbles and, consequently, the system does less damage to the ozone gas than forced circulation methods utilizing pumps.

In a further aspect of the invention, the anode reservoir may provide an ozone containing gas, a water stream containing high concentrations of ozone, or both. If the anode reservoir is intended to deliver both streams, the ozone containing gas is obtained above the hydrophobic membrane near the top of the anode reservoir and the water stream containing ozone is withdrawn near the bottom of the anode reservoir adjacent the anode where the ozone concentration is the greatest. If only ozone gas is required, the size of the anode reservoir may be minimized in accordance with fluctuations in ozone demand.

Another aspect of the invention provides for hydrogen gas, ozone gas and/or water containing ozone to be delivered under pressure without the use of pumps. In an entirely passive system, a water source communicates freely with the anode reservoir and cathode phase separator so that hydrogen gas, ozone gas and water containing ozone may be delivered at the same pressure as the water source. The passive system has no moving parts and requires extremely low maintenance. If higher pressures are desired, a self-pressurizing system may be used in which the low pressure water source is protected by a backflow prevention device and the ozone gas outlet from the anode reservoir includes a pressure control device. The output pressures of the ozone gas and hydrogen gas are independent of each other up to a common maximum pressure.

Yet another aspect of the invention provides an anode reservoir that effectively scrubs ozone from the anode gas. The warmer make-up water source is preferably introduced into the top of the anode reservoir, thereby establishing a temperature gradient (high temperature at the top and low temperature at the bottom) and an ozone saturation gradient (high concentration ozone at the bottom and fresh water at the top). The coldest water located at the bottom of the reservoir adjacent the anode will maintain the highest concentrations of ozone and is provided with the first opportunity to capture ozone from the bubble stream. The water added to the top of the anode reservoir is only allowed to capture ozone that cannot be utilized by the water there below which will be the first water to be delivered to an ozone consuming process.

Still another aspect of the invention provides a unique gas destruct system which can destruct waste hydrogen and/or ozone. The hydrogen is mixed with oxygen (or air) and passed over a hydrogen destruction catalyst producing heat. The hot gases, including excess oxygen may then be combined with waste ozone and passed downstream over an ozone destruction catalyst. Since there the ozone generator continuously produces hydrogen, the heat from the hydrogen destruction maintains the ozone catalyst at elevated temperatures to make more active and continuously dry the ozone destruct catalyst material. In this manner, the ozone destruct catalyst is maintained in a ready state for the destruction of ozone. Alternatively, the hydrogen destruct can provide high grade heat which may be used in other, unrelated processes, such as domestic hot water heating.

The present invention provides an ozone generator that is useful for the on-site generation and delivery of ozone that can be provided at a rate that accommodates a constant or variable demand for ozone. The ozone generator may be operated in a batch mode where the short term demand for ozone is significantly higher than the maximum ozone production rate of the electrochemical cell, but the demand is periodic. In such cases, where the average daily demand is comparable to the average daily production, the system may dissolve sufficient amounts of ozone in the water so that when ozone is required for the related process it may be provided in a highly concentrated form and diluted down as it is injected into the process stream. The ozone generators of the present invention may provide the process with a water stream containing a high concentration of dissolved ozone, a high weight percent ozone gas stream, or ozone in both forms.

The ozone generator includes one or more electrolytic cells comprising an anode, a cathode, and a proton exchange membrane (PEM) disposed between the anode and cathode. The PEM is not only proton conducting, but also electronically insulating and gas impermeable to maintain separation of ozone and oxygen gases generated at the anode from hydrogen or other gases generated at the cathode. The preferred PEM is a perfluorinated sulfonic acid polymer, available as NAFION from Du Pont de Nemours, Wilmington, Delaware.

The ozone generator also comprises an anode reservoir in fluid communication with the anode and having a means of separating the ozone and oxygen gases from liquid water. The anode reservoir is preferably positioned to provide the free flow of water from the anode reservoir to the anode and the free flow of water, oxygen gas, and ozone gas from the anode to the anode reservoir. It is also preferred that the anode and anode reservoir be suitably designed and oriented such that this free flow of water is further driven by processes occurring as a result of normal operation, such as the natural circulation of water due to thermal gradients and the rising of gas bubbles as they are generated within the anode. When the required use is the production of ozone saturated water, the fluid communication between the anode and anode reservoir is designed to minimize the coalescence of the small ozone gas bubbles. Maintaining small sized ozone gas bubbles maximizes the surface area of the bubbles, hence, giving rise to enhanced contacting with water in the anode reservoir.

The anode reservoir further comprises a porous hydrophobic membrane placed in such a manner that it provides phase separation between the oxygen and some of the ozone gas bubbles generated at the anode and dispersed in the water stored in the anode reservoir. The use of this hydrophobic membrane allows the anode reservoir to be in direct communication with a water source to provide a continuously filling anode reservoir and the delivery of ozone gas, oxygen gas, and ozone dissolved in the anode water at the same pressure as the feed water. The water source is preferably in communication with the anode reservoir through small diameter tubing to reduce or eliminate the amount of ozone lost through diffusion out of the system. The preferred porous hydrophobic membranes are made from polytetrafluoroethylene (PTFE), such as GORETEX available from W.L. Gore & Associates, Elkton, Maryland.

The ozone generation system further comprises a cathode in direct communication with its own phase separation system to allow the hydrogen generated at the cathode to be discharged for use in a secondary process, for venting, or for destruction. The cathode phase separating system may also be placed in fluid communication with the anode reservoir, thereby allowing the water that is transferred from the anode to the cathode through electroosmosis to eventually be returned to the anode. This phase separating system utilizes a porous hydrophobic membrane to allow the free release of hydrogen gas to any pressure below the cathode pressure while retaining the water in the system at pressures equal to or higher than the hydrogen discharge pressure.

While the anode and anode reservoir may be in fluid communication through tubes, such as with a filter press type electrolytic cell stack having a large active cell area, it is generally preferred that the anode be placed in direct fluid communication with the anode reservoir. Direct fluid communication may be achieved by positioning the anode face along the floor or walls of the anode reservoir. Similarly, the cathode may communicate hydrogen and water to the cathode phase separator either through a tube or by placing the cathode phase separator in direct fluid communication with the cathode. Either of these arrangements of the cathode phase separator are suitable. A remote cathode phase separator may be independently located while an integrated cathode phase separator may require fewer parts.

Consequently, it is possible to configure the present invention with either, both or neither of the anode reservoir and cathode phase separator in direct fluid communication with the electrolytic cell. Where both the anode reservoir and cathode phase separator are in direct fluid communication, the system may take on an L-shaped or V-shaped configuration which allows the anode to be positioned face up or sideways to allow ozone bubble separation and the hydrophobic membranes of the anode reservoir and cathode phase separator to be positioned near the top of their respective chambers.

The electrolytic cells preferably generate gas comprising between about 10% and about 18% by weight ozone in oxygen. Such electrolytic cells, including depolarizing electrolytic cells, are described in U.S. Patent No. 5,460,705 which description is incorporated by reference herein. A fully passive electrolytic cell for producing ozone is most preferred for small scale point of use applications such as point of use water treatment or built into equipment requiring ozone for disinfecting, decontaminating, washing, etc. The absence of moving parts reduces the initial cost of the device and also reduces the potential for failure and the maintenance of the device.

The anode reservoir preferably further comprises a cooling member which cools the water in the anode reservoir. Since the cooled water is in direct communication with the anode, PEM, and in close thermal communication with the cathode, the electrolytic cell may be maintained at a setpoint temperature, preferably below about 35°C, where the cell operates most efficiently, the quantity of ozone dissolved in water is increased over higher temperatures, and the lifetime of the dissolved ozone is extended. Without a cooling member of some type, the heat generated by electrical resistance in the electrolytic cell would increase the temperature of the cell, effecting cell operation and net ozone output. As an additional aspect of this cooling system, the design of the generator system lends itself to solid state coolers, such as thermoelectric devices.

A preferred electrolytic cell uses a proton exchange membrane (PEM), such as a perfluorinated sulfonic acid polymer sheet, in intimate contact between the anode and cathode catalysts. The anode and cathode catalysts are also in intimate contact with porous substrates that make electrical contact with the anode and cathode flowfields, respectively. The flowfields are typically porous metals, such as metal mesh screens or sintered metal particles or fibers, and provide the electrical conduction that is necessary for operation of the electrochemical cell. The anode flowfield is preferably made from a valve metal such as titanium. However, because the valve metals become embrittled from exposure to hydrogen, the cathode flowfield is preferably made from a metal other than the valve metals, such as stainless steel, nickel, copper, or combinations thereof.

It is preferred that the system include a battery backup system to maintain a potential across the electrolytic cell(s) during periods of power loss or idle operation. A preferred battery backup system includes a battery connected to the electrolyzer power supply or, if suitably protected, in parallel with the main supply. Maintaining this potential across the electrolytic cell has been found to increase the life of the lead dioxide electrocatalyst, which experiences a decrease in ozone production capacity following a complete loss of electrical potential. Furthermore, maintaining current through the electrolytic cell(s) also improves the turn on response allowing the system to rapidly come to full output.

A hydrogen destruct unit may be disposed in communication with the hydrogen discharge from the hydrogen phase separator. The hydrogen destruct comprises a catalyst such as a noble metal (e.g., platinum or palladium) in which hydrogen is allowed to combine with oxygen, preferably from free ambient air or forced air, without a flame resulting in the formation of heat and water vapor. Likewise an ozone destruction unit or "ozone destruct" may be disposed in communication with the ozone discharge from the anode reservoir phase separator. The amount of ozone that is produced and separated but not used by some ozone consuming process is catalytically destroyed on contact. The ozone destruct comprises a catalyst, such as Fe₂O₃, MnO₂, or a noble metal (e.g., platinum or palladium). The operation of this ozone destruct subsystem is further enhanced by placing it in thermal communication with the hydrogen destruct unit. In this manner the waste heat generated by the catalytic combination of hydrogen gas with ambient air and the heat generated from the degradation of ozone to oxygen may be utilized as high grade waste heat. One such example of the utilization of this waste heat would be the distillation of the ozone generation system feed water to improve the water quality. Another application would be the heating of water for use in an unrelated process, such as central heating, clothes washing or domestic hot water.

The electrolyzers of the present invention are capable of efficiently generating both the anode and cathode gasses at elevated pressures. This high pressure capability allows the anode reservoir to build and maintain pressures higher than that of the feed water that is used to fill the anode. This is accomplished by placing a back flow prevention device on the feed water inlet to the anode reservoir and a means of relieving the anode pressure. When the anode pressure is relieved and maintained below that of the source water, feed water free flows into the anode reservoir. When the pressure within the anode reservoir is allowed to build and water not allowed to exit, pressures within the reservoir will rise. Likewise, the cathode system will deliver hydrogen gas at the elevated pressure or below.

Preferably a pressure relief member is provided such that a maximum design pressure is not exceeded. This may be provided only for the liquid or for both the liquid and gas, but should not be provided for the gas alone, since the hydrophobic membrane will not allow water to escape from the anode reservoir. Therefore, an additional aspect of the invention includes a gas chamber that provides a captive gas volume that acts as a volume buffer. When the entire anode reservoir is filled with water and a means of allowing excess water to exit the reservoir is not provided, the volume of captive gas contained in the gas chamber is compressed as gas bubbles are generated by the electrolyzer and expands as these bubbles pass through the phase separator. Ideally this gas chamber is situated and designed such that it is highly unlikely that its gas will be displaced by liquid which would result in a reduced volume of the captive gas chamber. A preferred gas chamber is provided by an inverted U-tube disposed within the cathode and/or anode reservoir. Another particularly preferred gas chamber may be formed by placing a vertical stub in any of the fluid lines in communication with the reservoirs, most preferably located in the fluid line between the cathode and the cathode phase separator so that the captive volume is continuously maintained.

In one aspect of the invention, anode and/or cathode reservoirs are provided with means for separating gas and liquid phases, including a hydrophobic membrane or mechanical valves to allow phase separation of the gases produced at the electrode from water and for water level maintenance. The preferred phase separator is a hydrophobic membrane which eliminates the need for a complicated system of valves and level indicators, thereby eliminating the need for ozone compatible seals and materials, reducing potential breakdowns, and reducing maintenance. Another benefit of using hydrophobic membranes in the anode reservoir is that the reservoir may be completely full of water, thereby making the most efficient use of the size of the reservoir. The hydrophobic membranes used in the present invention include any membrane that is chemically resistant, i.e., anode phase separator resistant to ozone, gas permeable and water resistant. Examples of useful hydrophobic membranes include porous polytetrafluoroethylene (PTFE) and porous metals or ceramics impregnated with fluorinated polymers.

In another aspect of the invention, a cathode phase separator is provided with a phase separating means, such as mechanical valves for water level maintenance or a porous, hydrophobic membrane to allow phase separation of hydrogen gas produced at the cathode from water electroosmotically transported to the cathode. The preferred phase separating means is a hydrophobic membrane disposed in the cathode reservoir above the hydrogen-containing water coming from the cathode. The cathode phase separator may be located independent of the electrolytic cell(s) or anode reservoir, thereby providing flexibility in the configuration and dimensions of the overall system. When using a porous, hydrophobic membrane, the cathode may be directly connected to a water source, in which case the maximum pressure of the system output (ozone/oxygen gas or hydrogen gas) is limited by the delivery pressure of the water. Therefore, it may be desirable to include a water pressure boosting device, such as a pump, prior to water pretreatment and introduction. Again, it is not necessary for this pump to be chemical resistant, only that it is compatible with deionized water.

Another aspect of the invention provides for hydrogen gas, ozone gas and/or water containing ozone to be delivered under pressure without the use of pumps. In an entirely passive system, a water source communicates with the anode reservoir and cathode reservoir so that hydrogen gas, ozone gas and water containing ozone may be delivered at the same pressure as the water source. The passive system has no moving parts and requires extremely low maintenance. If higher pressures are desired, a self-pressurizing system may be used in which the low pressure water source is protected by a backflow prevention device and the ozone gas outlet from the anode reservoir includes a pressure control device. The output pressures of the ozone gas and hydrogen gas are independent of each other up to a common maximum pressure.

Yet another aspect of the invention provides an anode reservoir, such as a standing column of water, that effectively scrubs ozone from the anode gas. The water in the anode reservoir may be chilled or held under pressure to increase the amount of ozone driven into solution and, preferably, minimize mixing of the anode water. First, the present systems of dissolving, storing and delivering water containing high concentrations of ozone may be fitted with internal horizontal baffling to minimize mixing of water in the anode as fresh water supplied to the anode reservoir displaces the saturated water. The internal baffles prevent gas lift mixing, i.e., bottom to top stirring of the water in the anode reservoir due to the rising ozone/oxygen bubbles. A small hole may be provided in the baffle to allow gas bubbles to pass therethrough. Second, the fresh water may be heated, such as with a heat exchanger, prior to being introduced into the anode reservoir in order to raise the incoming fresh water temperature to ambient, or slight greater than ambient, temperature. The warmer make-up water source is preferably introduced into the top of the anode reservoir, thereby establishing a temperature gradient (high temperature at the top and low temperature at the bottom) and an ozone saturation gradient (high concentration ozone at the bottom and fresh water at the top). The coldest water located at the bottom of the reservoir adjacent the anode will maintain the highest concentrations of ozone and is provided with the first opportunity to capture ozone from the bubble stream. The water added to the top of the anode reservoir is only allowed to capture ozone that cannot be utilized by the water there below which will be the first water to be delivered to an ozone consuming process. Therefore, the thermal separation of the water provides a natural barrier to mixing. Finally, layers of hydrophobic membranes may be disposed in the anode reservoir to allow direct gas transfer up the column of water while preventing mixing of the water. The flow of water among the isolated regions, or "mini-reservoirs", between the hydrophobic membranes may be provided by external plumbing of sufficiently small diameter to prevent back diffusion of ozone.

A further aspect of the invention provides a water polishing system, preferably in a cathode reservoir circulation loop, consisting of a catalyst bed, such as activated carbon, to destroy any ozone in the cathode water resulting from membrane or seal leakage, electroosmosis, etc., and a deionizing column plumbed in series therewith. All or part of the cathode recirculation water may be circulated through this polishing system to continuously purify and deionize the water. In addition to polishing recirculated water, the same or different polishing system may treat make up water before it enters the cathode loop.

Another aspect of the invention dramatically reduces the quantity of water in the anode system by reducing the size of or completely eliminating the anode reservoir and providing only a minimal amount of water to the anode. The water level in the anode may be maintained by designing the system so that excess water from the anode is carried out of the anode by the flow of ozone gas. However, water must still be provided to the anode even if the anode reservoir is eliminated. Water may be supplied using either a mechanical control and feedback system or a predetermined and fixed water transfer rate, such as using an orifice, that is based on electrolyzer current, time and other relevant variables. Further, a fixed water transfer rate may be designed to provide a slight excess of water which will be swept away with the ozone gas.

Yet another aspect of the invention provides indirect delivery of water to the anode for electrolysis and/or indirect delivery of water to the membrane for hydration. Indirect delivery of water may be provided by back diffusion of water from the cathode using a suitable membrane or by using a tubulated membrane assembly with the tubes in communication with a water source.

Still another aspect of the invention provides for operating the cathode in a depolarized mode, for example by combining hydrogen atoms with oxygen, perhaps supplied from the air, to form water vapor rather than hydrogen gas. Oxygen and other cathodic depolarizers may be used to improve the operating efficiency of the electrolyzer.

The systems of the present invention preferably further comprise a water cooling member disposed in thermal communication with the process water in the anode loop or, preferably, in the cathode loop. Most preferably, the cooling member is designed to maintain the electrolytic cell at a setpoint temperature below about 35°C -- a temperature at which the lifetime of the dissolved ozone, if any, is extended. Without a cooling member of some type, the heat generated by electrical resistance in the electrolytic cell would increase the temperature of the cell, effecting cell operation and net ozone output.

Moving the water cooling members so that thermal management is handled by the cathode loop provides three primary benefits to the overall system. The first advantage involves material compatibility requirements. All components in the anode loop must be suitable for operation with ozone saturated water and many of the components must be materials compatible with ozone gas which is even more aggressive. Therefore, materials used in the construction of the wetted components in the anode loop are preferably selected from titanium, 316 stainless steel, glass, polytetrafluoroethylene (such as Teflon available from Du Pont de Nemours, E.I. & Co., Wilmington, Delaware), and polyvinylidine fluoride (such as Kynar available from Elf Atochem). Conversely, the cathode is a relatively stable system where any material compatible with high quality deionized water system are suitable. Most common materials are suitable for use in the cathode loop, including thermoplastics which are very inexpensive compared to materials suitable for use in the anode loop. Additionally, many of these components may be purchased off the shelf from commercial sources rather than custom manufactured. For example, the cathode reservoir may be made from polypropylene rather than the glass or stainless steel required for the anode reservoir.

Another benefit of moving thermal management to the cathode loop is the increase in ozone output since the amount of water contained in the anode loop may then be minimized. In fact, the anode loop, which must otherwise contain tens of liters of water to cover the cooling member, may contain less than one liter of water. Since ozone has a much shorter half life in water than in gaseous form, a reduction in the amount of water in the anode loop will reduce the continuous demand on the electrolyzer to replace ozone lost to the water. Furthermore, limiting the amount of water in the anode loop allows some or all of the phase separation to occur within the anode components in the electrolyzer stack itself rather than in an external reservoir. This also increases the ozone output since the ozone bubbles spend less time in contact with the water and, therefore, undergo less degradation.

A further benefit of moving thermal management to the cathode loop is that the cooling water circulation pump is relocated from the anode loop to the cathode loop. Mechanical work performed by a circulation pump on water containing dissolved ozone causes damage or degradation to the ozone dissolved in the water. Since the water is saturated with ozone, any ozone that is removed or destroyed, in this case through mechanical work, must be replaced. This destruction of ozone is avoided by moving the circulation pump to the cathode loop.

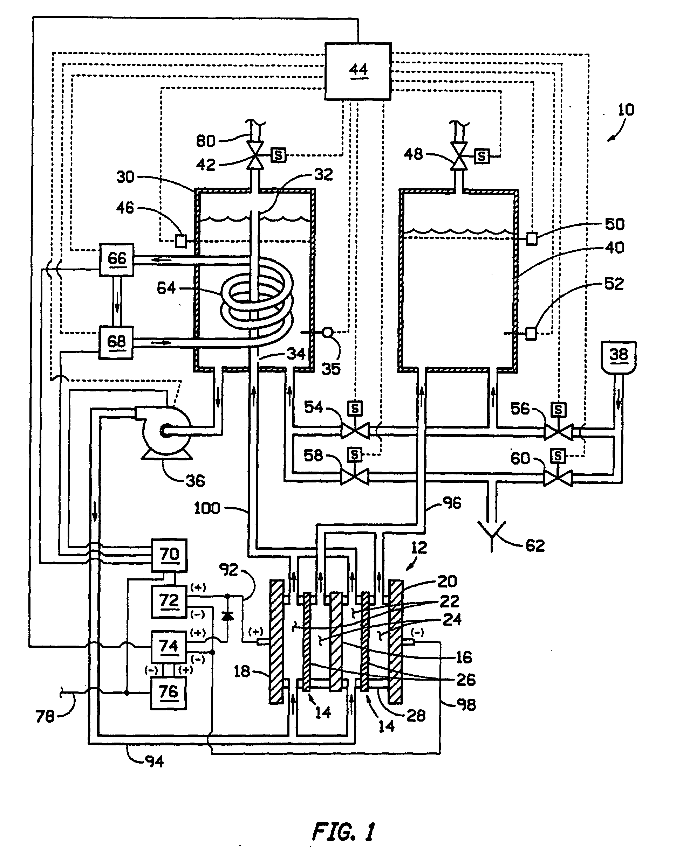

Figure 1 is a schematic diagram of a self-controlled ozone generator 10 which operates solely on electricity and distilled water. The heart of the ozone generator 10 is a stack 12 of electrolytic cells (two shown) 14 separated by bipolar plates (one shown) 16 and sandwiched between a positive end plate 18 and a negative end plate 20. Each of the two cells have an anode compartment 22 and a cathode compartment 24 separated by a proton exchange membrane 26. The cells are constructed in a similar manner as those cells described in U.S. Patent No. 5,460,705, which description is incorporated by reference herein, with the primary difference being that the preferred cathode and anode compartments of the present invention include rolled, expanded metal flowfields and the cathode compartment is filled with water instead of gas. The flow of fluid in and out of the anode and cathode compartments is schematically shown in Figure 1 as passing through framing members 28 for purposes of simplicity. However, it should be recognized that the fluids actually pass through manifolds formed by adjacent framing members 28, bipolar plates 16, proton exchange membranes 26 and the like which communicate the fluid to openings in the end plates 18, 20. The anode compartment 22 is provided with water from an anode reservoir 30. The anode reservoir 30 also serves as a liquid/gas separator wherein oxygen and ozone generated in the anode compartment 22 diffuses from the deionized water and collects at the top of the reservoir 30. The reservoir 30 preferably includes a stand pipe 32 which enhances the liquid/gas separation. A preferred stand pipe 32 includes a small hole 34 in its sidewall below the water line, most preferably near the bottom of the anode reservoir 30, which allows the water level in the stand pipe 32 to drop when the ozone generator 10 is in a low flow idle mode, such as when the recirculation pump 36 is turned off, so that gases will continue to rise from the anode compartment 22 through natural means. The small hole 34 does not interfere with flow of the gases up the stand pipe 32 during normal operation.

The water in the anode reservoir 30 is recirculated by a pump 36 back to the anode compartments 22. As water is consumed by the electrochemical reaction which produces oxygen and ozone, water may be added to the anode reservoir from a deionized water source 38 or from the cathode reservoir 40, as will be described in greater detail below. The gases accumulating in the upper portion of the anode reservoir 30, comprising essentially oxygen and ozone, are released through an ozone control valve 42. The ozone control valve 42 controls the flow of gases from the reservoir 30 either mechanically or in accordance with instructions from the system controller 44 which may be programmed in various manners. However, the control valve 42 is preferably opened to maintain a water level above the level sensor 46.

The cathode reservoir 40 holds deionized water which rises from the cathode compartments 24. The cathode reservoir 40 also serves as a liquid/gas separator wherein hydrogen generated in the cathode compartments 24 diffuses from the deionized water and collects at the top of the reservoir 40. A hydrogen control valve 48 controls the flow of gases from the top of the reservoir 40 in co-operation with various system sensors, preferably the high/low liquid level indicators 50, 52.

The anode reservoir 30 and the cathode reservoir 40 are preferably in communication with each other and a source of deionized (DI) water 38. While these components may be communicated in a variety of ways, it is preferred that the system remain simple and include a minimal number of valves and couplings. One preferred configuration is shown in Figure 1 having tubing that includes a first shut-off valve 54 between the reservoirs 30, 40 and a second shut-off valve 56 between the DI water source 38 and the cathode reservoir 40. It is also preferred to have tubing that provides a drain loop having a third shut-off valve 58 between the anode reservoir 30 and the drain 62 and a fourth shut-off valve 60 between the DI source 38 and the drain 62 for bypassing the first and second shut-off valves for flushing or draining the system.

A cooling member 64 is disposed in a thermal relationship with the water in the anode reservoir 30. Preferably, the cooling member 64 is a cooling coil disposed within the anode reservoir 30 that circulates a cooling fluid through a cooling cycle that includes a condenser 66 and a compressor 68. While only about three windings of the cooling coil 64 are shown, any number of windings may be used.

The ozone generator 10 also includes a main power supply unit 70 and a power converter 72 for converting AC current to DC current for operation of the array of electrolytic cells 12. The main power supply unit 70 preferably provides electrical power to all electrically powered devices in the generator 10 through appropriate electrically conducting wires. The generator 10 preferably includes a battery 74 which is used to backup the main power supply unit 70 during electrical interruptions and to provide smooth DC power to the system controller 44. The battery 74 is preferably continuously charged by a battery charger 76 in order to maintain the battery 74 at a full charge. The main power supply unit 70 and the battery charger 76 are directly connected through electrical line 78 to some external source of AC electrical power, such as a standard household electrical line or a gasoline powered generator for remote use.

The ozone generator 10 is preferably self-controlled by a system controller 44 which receives various signals from sensors and switches and sends control signals to valves, pumps, switches and other devices shown in Figure 1. The system controller 44 executes system control software stored in a memory. The software is programmed to monitor the various signals indicating the operating conditions of the system and to control various devices in accordance with those conditions. It should be recognized that the programming of the system controller may take on any of a great number of schemes within the scope of the present invention and include additional, non-essential programming, such as system diagnostics, communications, data storage and the like. Further, the system may include additional devices and monitors not shown or described herein, such as an on/off switch.

In operation of the ozone generator 10, the DI water source 38 preferably provides water at a pressure higher than the normal operating range of the anode reservoir 30 and the cathode reservoir 40 so that deionized water can be added to the system during normal operation. Reservoirs 30, 40 are preferably designed to operate in a range between about 0 and about 30 psig (206.8 kN/m²), and deionized water is conveniently provided to the system at about 50 psig (344.7 kN/m²). During initial start-up of the generator, the valves 54, 56 connecting the reservoirs 30, 40 and the DI water source 38 are open, but the valves 58, 60 leading to a system drain 62 remain closed. Deionized water fills the anode compartments 22 and the cathode compartments 24. Prior to filling the anode reservoir 30 and the cathode reservoir 40, the gas valves 42, 48 are closed to allow the pressure in the system to rise up to about 30 psig (206.8 kN/m²). Providing additional DI water into the system raises the level of water in either reservoir 30, 40 to the high level sensors 46, 50 by letting trapped air escape through the gas valves 42, 48 on the reservoirs 30, 40, respectively, to maintain system pressure below about 30 psig (206.8 kN/m²). When the reservoirs are filled, the flow of deionized water is stopped by the second shut-off valve 56. Recirculation of water in the anode reservoir 30 by the pump 36 and cooling of the water within the reservoir 30 by the cooling member 64 commences when electric current is applied to the array of electrolytic cells 12. The first shut-off valve 54 will typically remain open so that water carried through the proton exchange membranes 26 from the anode compartments 22 to the cathode compartments 24 can rise into the cathode reservoir 40 and eventually return to the anode reservoir 30.

Initial operation of the ozone generator with the gas valves closed causes oxygen, ozone, and water vapor to accumulate in the anode reservoir 30 and hydrogen and water vapor to accumulate in the cathode reservoir 40 until the system pressure reaches a desired level of about 30 psig (206.8 kN/m²). The gas valves 42, 48 are operated by the system controller 44 to maintain the desired system pressure while sending the wet oxygen/ozone gas through line 80 to some ozone consuming process, such as an advanced oxidation process. The wet hydrogen can be collected and used or flared. The ozone generator can continue operation while deionized water is added to the system by temporarily increasing the flow of gases through the gas valves 42, 48 to compensate for added water without raising the system pressure. Alternatively, the system pressure can be reduced prior to adding the deionized water.

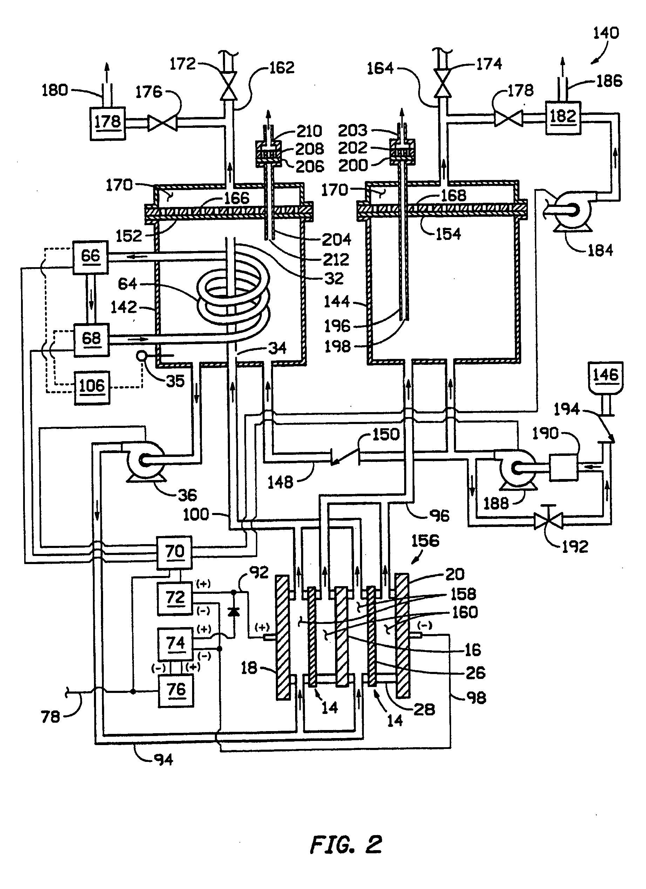

Figure 2 is a schematic diagram of an alternate ozone generator 140 which operates without a controller, valves or level sensors. The ozone generator 140 operates in a similar manner to the ozone generator 10 of Figure 1, but has been modified to operate in a completely passive manner without the requirement of a control system, valves, or level sensors. The generator 140 eliminates all solenoid valves 54, 56, 58, 60, 42, 48, all level sensors 46, 50, 52 and the control system 44 that are part of generator 10 of Figure 1.

The passive generator system 140 provides all water handling requirements and maintains a full water level in the anode reservoir 142 and cathode reservoir 144. These reservoirs 142, 144 are both placed in direct communication with the deionized water source 146. The fluid line 148 between the cathode reservoir 144 and the anode reservoir 142 is small in diameter to provide a sufficiently rapid fluid flow from the cathode reservoir 144 to the anode reservoir 142 so that ozone dissolved in the anode water is not allowed to diffuse into the cathode reservoir 144. A back flow prevention device 150 prevents water or gas flow from the anode reservoir 142 to the cathode reservoir 144.

The gas vent control valves 42 and 48 in Figure 1 are replaced with hydrophobic membranes or phase separators 152, 154 that prevent the liquid water from escaping out of the tops of the reservoirs 142, 144. These hydrophobic phase separators 152, 154 provide a barrier to water in its liquid state, but allows the free transmission of gases such as water vapor, hydrogen gas, oxygen gas, and ozone gas. The separators 152, 154 allow water from the deionized water source 146 to displace any gases in the reservoirs 142, 144 during initial filling. After all the gases are eliminated from the reservoirs 142, 144 and the water is in direct contact with the hydrophobic membranes 152, 154, then the transfer of water ceases as the pressures in the reservoirs 142, 144 equalize with that of the water source 146. The water in each reservoir 142, 144 continuously remains at this level during all phases of operation.

During normal operation of the ozone generation system 140, gas bubbles are generated in the electrolyzer 156 and then transfer to the water reservoirs. Oxygen and ozone gas bubbles generated in the anode compartments 158 of the electrolyzer 156 are transferred to the anode reservoir 142 and hydrogen gas bubbles generated in the cathode compartments 160 are transferred to the cathode reservoir 144 where the gas bubbles rise to the top surface of their respective reservoirs into contact with the hydrophobic membranes 152, 154. The hydrophobic membranes provide little or no restriction to the transmission of gas and water vapor from inside the reservoirs, at elevated pressure, to the vent lines 162, 164. The separators 152, 154 are suitably supported by support structures 166, 168 which provide free flow of gas and any condensed liquid, but provide sufficient support of the membranes so that pressure differentials between the water in the reservoirs and the gas in the vent lines may possibly exceed about 100 psi. The membrane 152 and the support 166 are in turn provided with mechanical support and liquid and gas sealing by the vessel top 170. The ozone/oxygen vent 162 is in direct communication with the dry side of the membrane 152 allowing the gas previously contained in the bubbles to leave the anode reservoir. Likewise, the hydrogen vent 164 is in direct communication with the dry side of its membrane 154 allowing the hydrogen gas previously entrained in bubbles to leave the cathode reservoir 144.

A pressure regulator 172 may be added to allow the pressure of the oxygen and ozone gas on the dry side of the membrane 152 to reach any value up to the pressure of the liquid within the vessel 142. In a similar manner, a pressure regulator 174 may be added to the hydrogen vent 164 to control the hydrogen delivery pressure. The pressure regulators 172, 174 may be operated independently of each other allowing the gases from the anode reservoir 142 and the cathode reservoir 144 to be regulated individually at gas pressures from sub-ambient up to the pressure of the water which is common to both the anode reservoir 142 and the cathode reservoir 144. Overpressure regulators 176, 178 may be added to prevent overpressurizing the system in the event that the main discharge vents 162, 164 become blocked or surplus gas is produced. Ozone exiting the pressure release valve 176 may be destroyed using a catalytic destruct unit 178 before the gas is released through vent 180 to the atmosphere. Surplus hydrogen, or that resulting from overpressure gas, may be destroyed in a catalytic destruct unit 182 that reacts the hydrogen gas with oxygen from the air provided by an air pump 184. The resulting water vapor and surplus air is released through a vent 186 to the atmosphere. The two destruct units 178, 182 may be placed in thermal communication with each other so the waste heat from the hydrogen/oxygen combination reaction will assist in the destruction of the ozone gas.

An optional boost pump 188 may be added between the deionized water source 146 and the water reservoirs 142, 144. To further condition the water, a resin bed 190 may be added to the water source line. It is preferred to further include a return loop containing flow rate adjusting means 192 in order to continuously polish the incoming water. A back flow prevention device 194 is useful to prevent water from returning to the source 146.

An auxiliary vent system in the cathode reservoir 144 prevents the transfer of hydrogen gas from the cathode reservoir 144 to the anode reservoir 142 in the event of an interruption of the water supply. This is accomplished using a dip tube 196 that extends downward in the cathode reservoir 144 to a point 198 above the bottom of the reservoir which defines the minimum acceptable water level. The dip tube 196 extends upward out of the reservoir and communicates with a hydrophobic membrane 200 with suitable support and housing 202. When the water level is above point 198 and the reservoir is under pressure, water forces any gas in the tube 196 through the hydrophobic membrane 200 and out the vent 203 which is at atmospheric pressure or below. Should the water in the cathode reservoir drop below point 198, the water presently in the tube will drain back out of the tube 196 into the reservoir 144 allowing the gas within the cathode reservoir 144 to escape up the dip tube and out the vent 203. In this manner, the pressure in the reservoir 144 is reduced down to ambient pressure to prevent any further transfer of liquid from the cathode reservoir to the anode reservoir.

The anode reservoir 142 preferably includes a similar auxiliary vent system having a dip tube 204, hydrophobic phase separator 206, housing 208, and vent 210. Through some event, such as pressure fluctuations in the incoming water, if the pressure in the anode reservoir 142 is higher than the pressure in the cathode reservoir 144, then the pressure driven transfer of water from the cathode reservoir to the anode reservoir will stop. When the water level in the anode reservoir falls below the lower opening 212 of the dip tube 204, the pressure within the anode system is reduced and the pressure driven water transfer from the cathode reservoir to the anode reservoir is reestablished.

The rest of the system 140 may remain unchanged from that of generator 10 of Figure 1. Therefore, system 140 may include an anode recirculation pump 36, a power supply 70, a cooling system 66, and a standpipe 32 with a level equalizing hole 34 for natural circulation of the water during periods when the anode pump 36 is off and the water level falls below the top of the standpipe 32. The cooling system 64, 66, 68 may be operated by an electrical or mechanical temperature controller 106 and a temperature sensor 35 in direct communication with the condenser system and the body to be temperature regulated, shown as the anode reservoir water in Figures 1 and 2 but which body may be the anode end plate or any other location representative of the electrolyzer temperature. The power supply unit 70 may also operate in an autonomous mode with self-control of the power output to match ozone demand.

### Electrolytic Cells

Ozone gas is preferably generated by an electrolytic method which offers both process and cost benefits. In the electrolytic method, ozone is generated by the electrolysis of water using a special electrolytic cell. Sources of electrical power and water are the only requirements for producing O₃ electrochemically. Unlike the ozone gas produced by the corona process, electrolytically generated ozone does not contain toxic by-products. The electrolytic reactions occur by applying DC power between the anode and cathode which are placed on either side of a proton-exchange membrane (PEM), preferably a perfluorinated sulfonic acid polymer membrane (such as NAFION 117 available from DuPont de Nemours, Wilmington, Delaware). Water is fed to the anode catalyst where water oxidation takes place resulting in both the thermodynamically favored O₂ evolution reaction and the O₃ formation reaction.

Utilization of high overpotentials and certain electrode materials selectively enhance O₃ formation at the expense of O₂ evolution. The water oxidation reactions yield protons and electrons which are recombined at the cathode. Electrons are conducted to the cathode via the external circuit. The protons and electrons are recombined at the cathode in the presence of water to form hydrogen gas.

The use of a PEM instead of a liquid electrolyte offers several advantages. First, fluid management is simplified and the potential for leakage of corrosive liquids is eliminated. Second, the PEM/anode interface provides a chemical environment which is well-suited to the electrochemical O₃ reaction. A PEM based on a fluoropolymer, such as a perfluorinated sulfonic acid polymer, displays very high resistance to chemical attack.

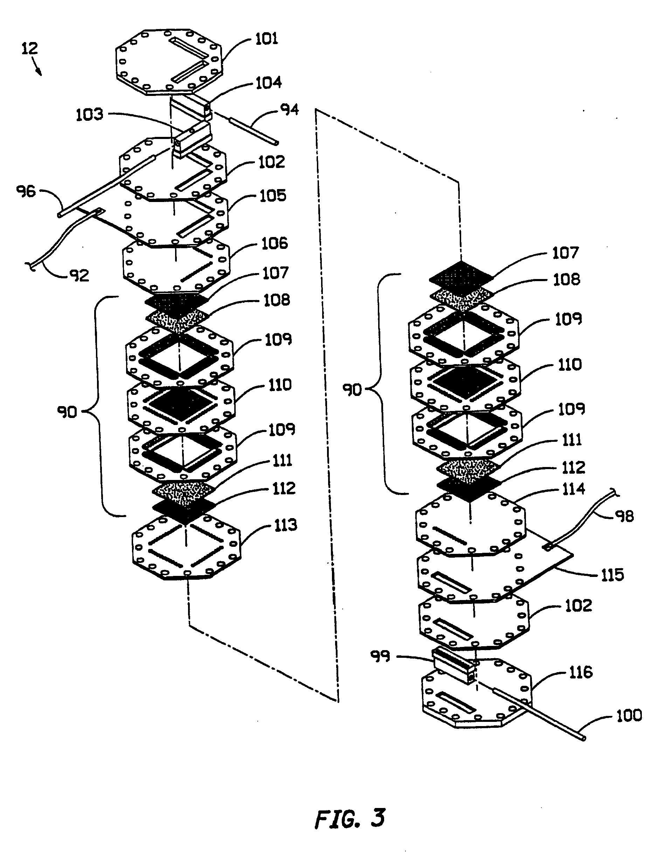

Figure 3 is an exploded perspective view of the electrolytic cell stack 12 for the production of ozone. The cell stack 12 may include any number of individual cells, but is shown here with two cells 90 which are similar in construction and operation. Each cell 90 comprises an expanded titanium flowfield 107, a porous titanium member 108 having a lead dioxide catalyst deposited on its surface facing the PEM 110, and a cell frame 109 disposed around the flowfield 107 and member 108. The PEM 110 may be either coated with a cathodic catalyst, such as platinum, facing the porous stainless steel sheet 111 or be placed in contact with a carbon fiber paper (not shown) that has the cathodic catalyst formed thereon. A porous stainless steel sheet 111 is placed against the cathodic catalyst surface, followed by a rolled, expanded stainless steel flowfield 112 which may include a plurality of sheets. Another cell frame 109 is disposed around the sheet 111 and flowfield 112. A bipolar plate 113 is disposed between the two cells 90 to allow electronic conduction between the adjacent stainless steel flowfield 112 and the adjacent titanium flowfield 107.

The positive terminal of the cell stack 12 (shown at the top of Figure 3) includes a current collector face plate 106 and a current collector 105 which is coupled to a cable 92 attached to the positive terminal of the power converter 72 (shown in Figure 1). An insulator plate 102 is disposed against the current collector 105 to isolate the end plate 101, the water recycle bushing 104, which delivers water from the anode reservoir 30 through the tubing 94 to the anode compartment, and the hydrogen/water bushing 103, which communicates water and hydrogen from the cathode through tubing 96 to the cathode reservoir 40.

The negative terminal of the cell stack 12 (shown at the bottom of Figure 3) includes a current collector face plate 114 and a current collector 115 which is coupled to a cable 98 attached to the negative terminal of the power converter 72 (shown in Figure 1). An insulator plate 102 is disposed against the current collector 115 to isolate the end plate 116 and the water/oxygen/ozone bushing 99, which delivers water, oxygen and ozone from the anode compartment through the tubing 100 to the anode reservoir 30. The current collector 115 is therefore cooled by the anode water passing through the cell stack 12. The primary heat dissipating components of the power supply are preferably in thermal contact with the cooled current collector 115.

The two endplates 101, 116 are drawn together to compress all the components of the electrolytic cell stack 12 into a filter press type arrangement in which adjacent components are in intimate contact. The cell frames 109, membranes 110, bipolar plate 113, the current collector face plate 106, and the like are sufficiently compressed to provide a sealing engagement and collectively form manifolds for the delivery and withdrawal of fluids in the cell stack 12.

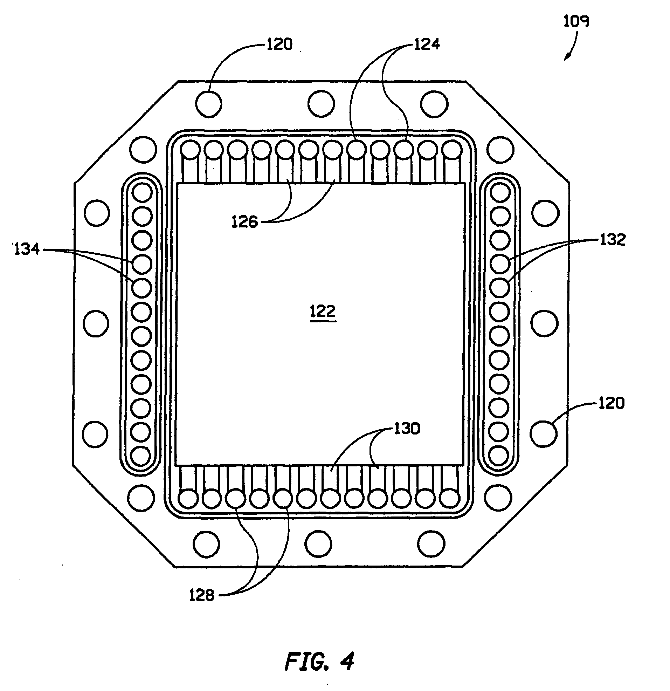

Figure 4 is a front view of the cell frame 109 suitable for use in the electrolytic cell of Figure 3. The cell frame 109 has a plurality of bolt holes 120 around its perimeter edge for aligning and securing the cell frame in place with adjacent membranes 110, bipolar plates 113 or current collector face plates 106. The cell frame 109 has a center region 122 that is open to receive a flowfield and electrode, such as the expanded titanium flowfield 107, the porous titanium sheet 108 and the electrocatalyst formed on the sheet 108. A first manifold is provided by the row of holes 124 which may, for example, supply water to the center region 122 through the slots 126. The water flowing through the center region 122 is then preferably collected in the opposing manifold, which is comprised of the holes 128 and slots 130, and withdrawn from the cell stack. It should be recognized that the holes 124, 128 in both manifolds are lined up with and communicate with similar holes through adjacent components of the cell stack 12 (See Figure 3). In the example just given, the water is delivered through holes 124 and slots 126 and passed through the titanium flowfield 107 and the porous titanium sheet 108 to the electrocatalyst where oxygen and ozone are produced. The ozone containing water is withdrawn through the slots 130 and holes 128 out of the cell stack to the anode reservoir. Conversely, the manifold formed by holes 132 and the manifold formed by holes 134 allow passage of fluids therethrough to another cell frame (not shown), such as a cell frame around a stainless steel flowfield 112 and a porous stainless steel sheet 111.

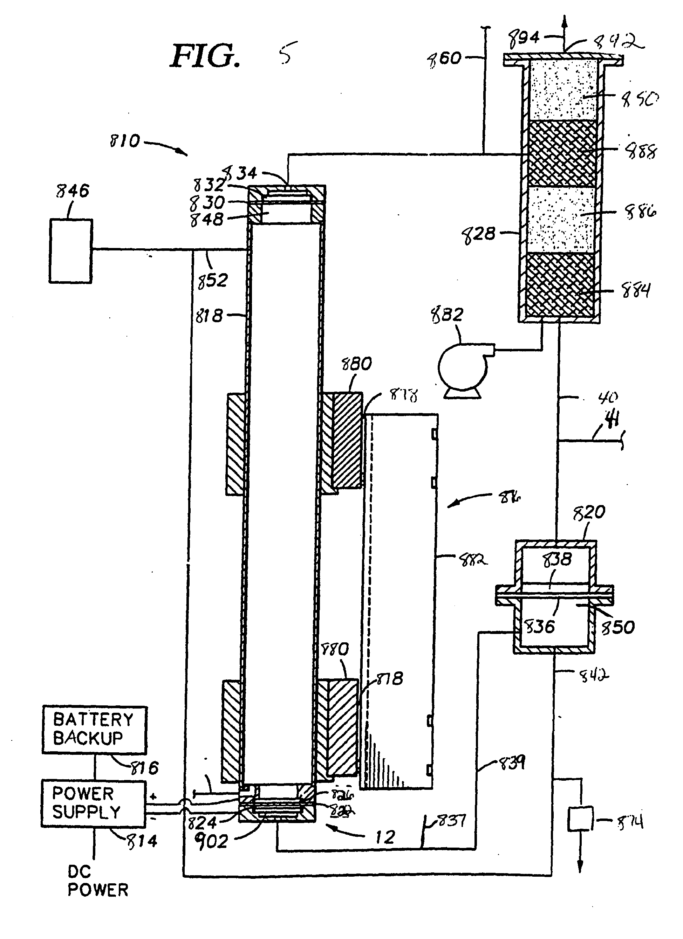

Figure 5 is a schematic diagram of an entirely passive ozone generation system 810 which operates solely on electricity and water, preferably either deionized, distilled, or reverse osmosis (RO) water. The system 810 includes an ozone generator 812, a power supply 814 and battery backup 816, an anode reservoir 818, a cathode phase separator 820 and a gas destruction unit 828. The ozone generator 812 is preferably an electrolytic cell comprising a proton exchange membrane 822, a cathode 824 with substrate and flowfield and an anode 826 with substrate and flowfield. The anode reservoir 818 comprises an anode gas phase separator membrane 830 and porous support member 832. The anode 826 is provided with water from the anode reservoir 818. The anode catalyst enables the anode 826 to use the water to produce oxygen and ozone a portion of which dissolves into the water in the anode reservoir 818. The anode reservoir 818 also serves as a liquid/gas separator wherein oxygen and ozone generated at the anode 826 forms bubbles or diffuses from the deionized water and rises to the top of the reservoir 818. These gasses pass through the anode phase separator membrane 830, preferably a porous hydrophobic membrane, which is provided with suitable support 832 and flow channel 834 to maintain the integrity of the membrane 830 while the anode reservoir 818 is operated at a desired system pressure.

The cathode 824 is in fluid communication with a cathode phase separator 820 having a porous hydrophobic membrane 836 which is provided with a suitable porous support member 838. Hydrogen gas from the dry side of the membrane 836 is discharged through the support member 838 and through line 840 either to the gas destruct unit 828 or to an unrelated process through line 841. It is preferred that the water that is transferred from the anode 826 to the cathode 824 through electroosmosis be continuously returned from the cathode phase separator 820 to the anode reservoir 818 through a fluid line 842, preferably made of small bore tubing. The fluid line 842 is small in diameter to provide a sufficiently rapid fluid flow from the cathode phase separator 820 to the anode reservoir 818 so that ozone dissolved in the anode water does not diffuse into the cathode phase separator 820.

The hydrophobic phase separators 830,836 provide a barrier to water in its liquid state, but allow the free transmission of gases such as water vapor, hydrogen gas, oxygen gas, and ozone gas. The separators 830,836 allow the water source 846 to be placed in direct fluid communication with the anode reservoir 818 so that water will displace any gases in the anode reservoir 818 or cathode phase separator 820 during initial filling and refilling of the anode reservoir. After all the gases are eliminated from the head space 848 of the anode reservoir 818 and the head space 850 of the cathode reservoir 820, then the water will make direct contact with the hydrophobic membranes 830,836 and the transfer of water will cease as the pressures in the anode reservoir 818 and cathode reservoir 820 equalize with that of the water source 846. Provided that the water pressure in the water source 846 is higher than that in the anode reservoir, the anode reservoir 818 and cathode phase separator 820 will remain full of water during all phases of operation. The water supply line 852 is preferably small in diameter so that ozone dissolved in the anode reservoir water is not allowed to diffuse into the water source 846.

A cooling member 876 is preferably provided for removing waste heat from the system and further chilling the anode reservoir water to decrease degradation of dissolved ozone and increase the ozone saturation limit. A preferred cooling member 876 is shown in Figure 5 comprising one or more thermoelectric devices 878 in thermal contact with the anode reservoir 818, such as through the thermal heat spreaders 880. The hot reservoirs of the thermoelectric devices 878 are preferably coupled to a heat dissipating member, such as the heat sinks 882 cooled by ambient air. The thermal heat spreaders 880 are provided to increase the surface area for heat transfer through the walls of the anode reservoir 818, especially if the reservoir is made from a plastic or metal having poor heat transfer properties.

The hydrogen generated at the cathode 824 and phase separated by the hydrophobic membrane 836 may be consumed by an unrelated process, stored in a pressure vessel, or, as shown in Figure 5, directed to a gas destruct system 828. The gas destruct system 828 consists of a source of combustion air 882, a hydrogen-air mixing region 884, a hydrogen destruct region 886 having a hydrogen-air combination catalyst, an air-ozone mixing region 888, and an ozone destruct region containing an ozone destruction catalyst 890. The gas destruct system 828 also includes a port 892 that may be open to the room or atmosphere, or directed to a drain or vent 894. The preferred gas mixing regions 884,888 will contain a tortuous path, such as that provided by stainless steel wool or other similar material placed upstream of the catalyst, to distribute the gases evenly across the entire face of the catalyst and to provide sufficient mixing of the gas and air. The hydrogen destruct catalyst may be any suitable hydrogen-oxygen combination catalyst, such as the noble metals (platinum or palladium), which may be supported on a ceramic structure, alumina beads or pellets, plated onto a metallic substrate, etc. Likewise, the ozone destruct catalyst may be any catalyst suitable for the decomposition of ozone into oxygen. Suitable catalysts include, but are not limited to, MnO₂, Fe₂O₃, platinum, etc., or combinations thereof. It is preferred that the hydrogen destruct region 886 be placed upstream and/or in thermal contact with the ozone destruct region 890 allowing the heat generated from the oxidation of hydrogen to assist in the destruction of surplus ozone. Certainly, if gaseous ozone and/or hydrogen can be used for other purposes, such as being supplied to another process, then it is not necessary to destruct either or both gases and the heat provided by the hydrogen destruction may be provided by other sources such as electrical resistance heaters, or the ozone destruct may be operated at room temperature, etc.

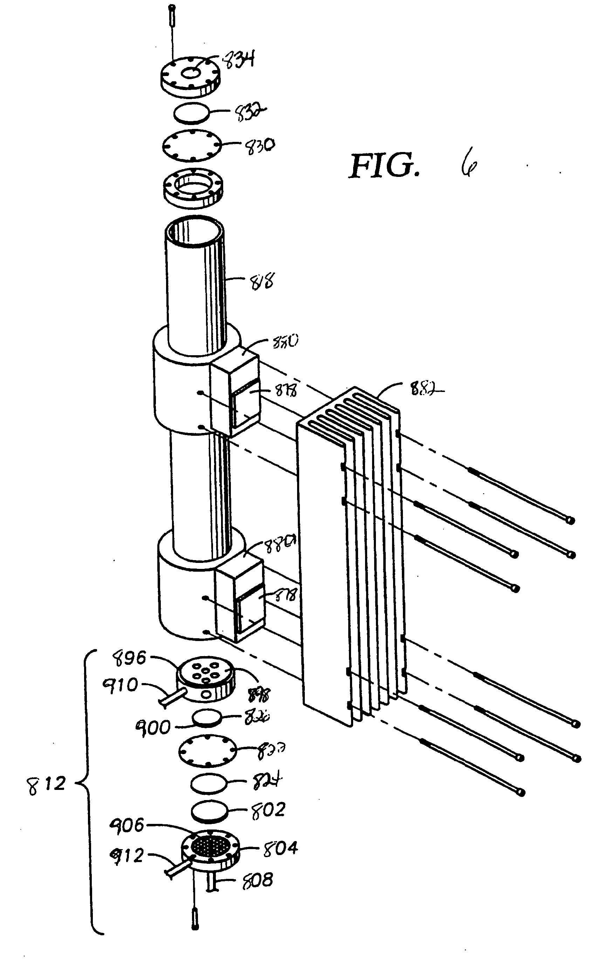

Figure 6 is a detailed schematic diagram of a preferred anode reservoir 818 and electrochemical cell 812 for systems having an anode 826 and cathode 824 with an active catalyst area of tens of square centimeters or less. The lower end of the anode reservoir 818 is fitted with a framing member 896 having a metal mesh 898 having large openings therein which allow the free passage of water and gas bubbles. The metal mesh provides mechanical support and electrical contact to the anode porous flowfield 826. The anode flowfield 826 has a catalyst surface 900, preferably a lead dioxide catalyst, deposited on the face of the flowfield 826 contacting the membrane 822. The catalyst surface 900 is in direct contact with the proton exchange membrane 822 which is in turn in direct contact with the cathode catalyst 824. The cathode catalyst 824 is provided with mechanical support and electrical contact in the form of a porous frit 902 which is in turn provided with a support from the end cap 904 having a flowfield 906 therein and a fluid connection 908. Hydrogen and water formed at the cathode 824 leave the cell 812 through the fluid connection 908. Electrical connections 910 and 912 provide current to the anode and cathode respectively.

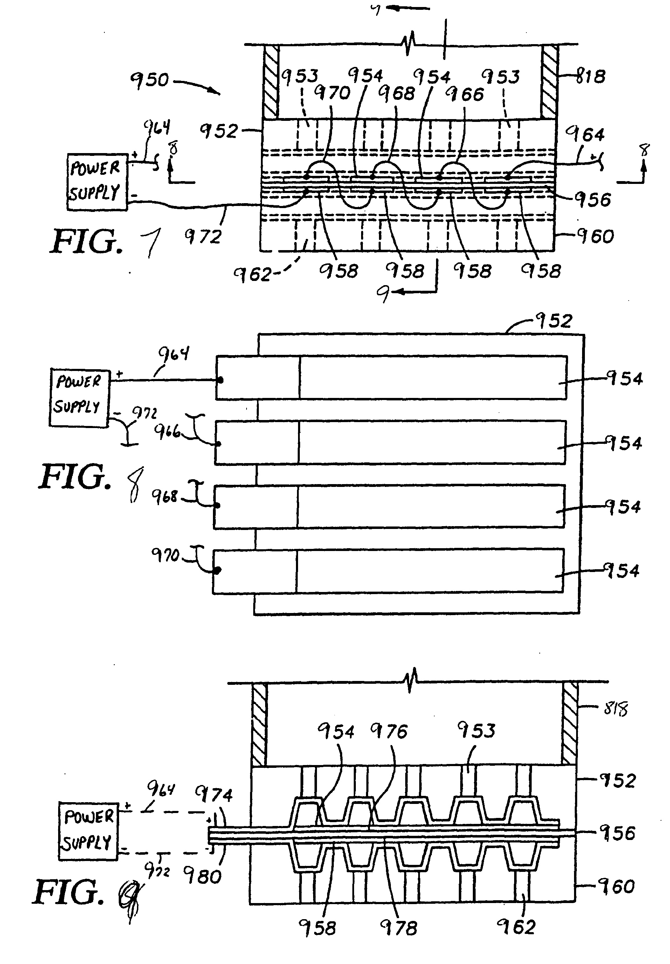

Figure 7 is an alternate multiple cell electrolyzer 950 allowing the use of larger active surface areas while maintaining the simplified overall design and low system current. This electrolyzer 950 eliminates the multiple fluid and gas seals as well as most fluid manifolds while minimizing the number of components. The electrolyzer assembly 950 includes an electronically insulating anode support 952 which provides flow channels 953 to multiple anodes 954 which are placed in strips or other similar geometry such that they are provided with fluid connections in parallel or all anodes are exposed to the same anode reservoir 818 while remaining electrically isolated. A single proton exchange membrane 956 is sandwiched between the multiple anodes 954 and the mating cathodes 958. The multiple cathodes 958 are also supported by an electronically insulating cathode plate 960 which provides fluid flow channels 962 and mechanical support while electrically isolating each cathode 958. A first anode 954 is provided with electrical connection 964 and its corresponding cathode is wired to another anode, such as the adjacent anode, with a conductive member 966. The electrical connection of each anode and cathode continues with additional conductors 968,970 and conductor 972 providing electrical contact to the last cathode.

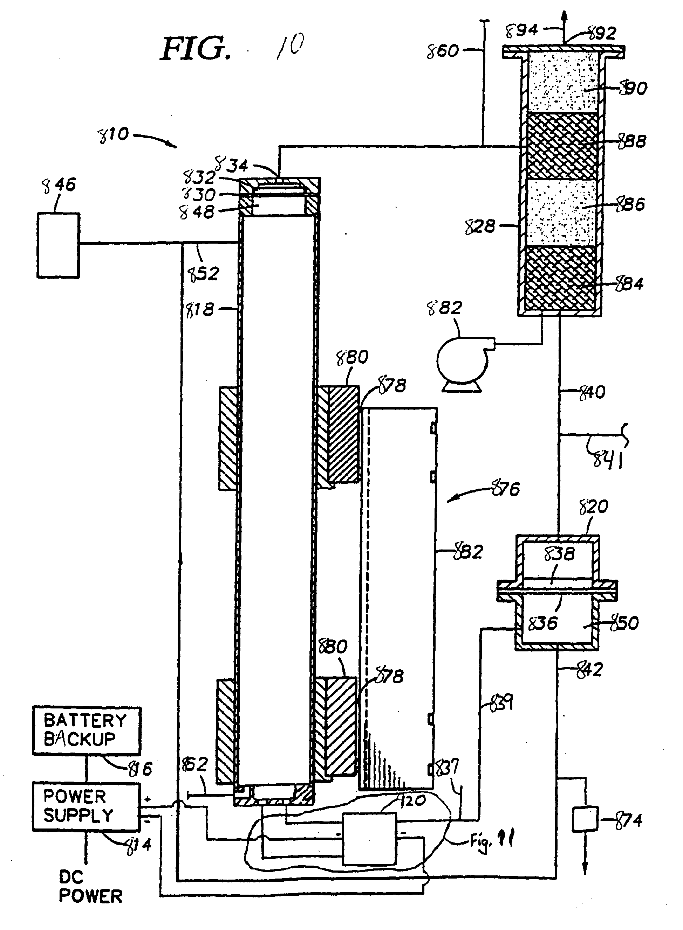

Figure 8 shows a face view that is representative of the anodes 954 and plate 952, where the electrically insulating support plate 952 provides mechanical support and flow channels to the electrically separated anodes 954. Figure 8 is also representative of the cathodes 958 and plate 960 positioned across the membrane 956 and opposite the anodes 954.

Figure 9 is a cross-sectional view of the electrolyzer 950 of Figure 8. The anode support 952 is preferably molded of a thermoplastic that is suitable for use with ozone and provides suitable mechanical support, such as polyvinylidene fluoride (PVDF) available under the trade name KYNAR from Elf Atochem North America, Philadelphia, Pennsylvania. An individual anode assembly consists of a nonporous, electrically conductive anode strip 974 which follows the flow field pattern molded into plate 952 and extends past the edge of the plate 952 to facilitate electrical contact. Over this nonporous corrugated strip is placed a porous frit material 954, such as titanium, coated with the anode catalyst 976. The proton exchange membrane 956 is placed over the anode assemblies and the process is repeated with a cathode catalyst 978 backed by a porous frit 958, and a non-porous, electrically conductive cathode strip 980 whose flow field matches that molded into the cathode end plate 960 which is molded from a non-conductive material with suitable chemical and mechanical properties.

The fluid connections which connect the cathode to the cathode phase separator are not shown in Figures 7 and 9. Such connections may comprise a member which provides a small chamber that communicates each channel 962 with the fluid line to the cathode phase separator 820. When using the cell 950, the end plate 952 may form a part of the anode reservoir floor or wall and the non-porous conducting strips 974 may be made from perforated metal which allows the free exchange of water and gas through the channels 953 while allowing tight fluid seals where the strips 974 extend past the edge of plate 952 and make electrical connection to a power supply.

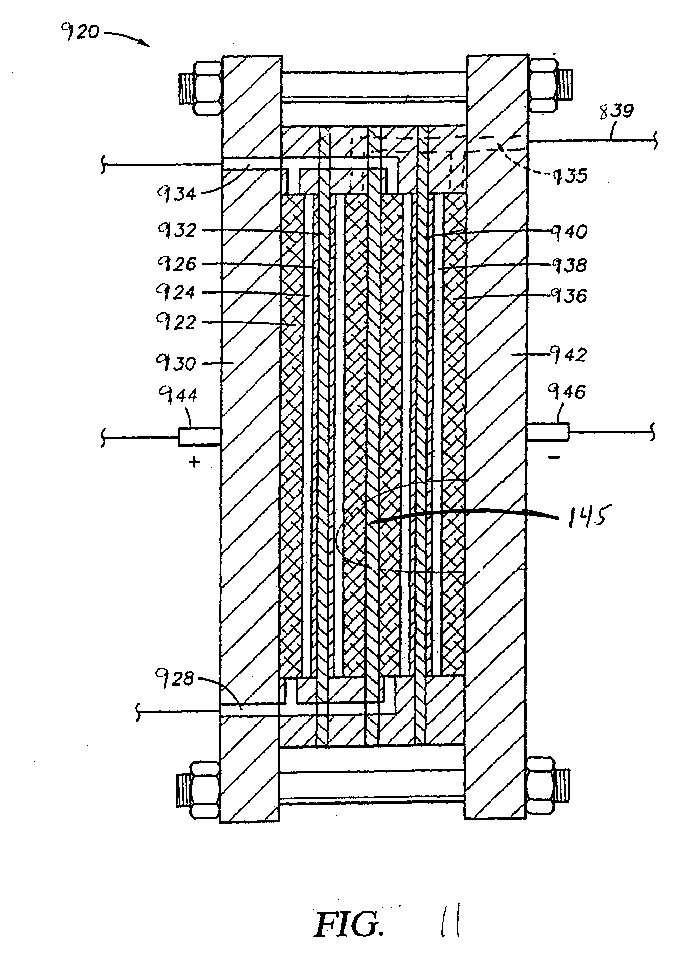

Figure 10 is a schematic diagram of an ozone generator system of the present invention that is similar to the system of Figure 5 except that the single cell 812 having anode 826 in direct fluid communication with the anode reservoir 818 has been replaced with an electrolytic cell 920 that is in fluid communication with the anode reservoir 818 and cathode phase separator 820 through tubes. Note that the remainder of the system may be unchanged and may still operate in an entirely passive mode.

Figure 11 is a schematic diagram of an electrolytic cell 920 that is preferred for providing higher active areas. In such systems, for reasons of simplifying the power supply, it is advantageous to have the system current remain relatively low, yet allow the overall applied voltage to increase. An electrochemical cell stack 920 may be provided in a filter press type arrangement to allow the use of multiple anodes and cathodes placed electrically in series. The stack 920 is provided with water inlet flow channels 928 and water outlet flow channels 934 which deliver fluid to and from each anode flowfield 922, porous anode substrate 924 and anode catalyst 926. An additional water outlet flow channel 935 is preferably disposed along an opposed top edge of the cell so that the channel 935 can communicate with each cathode flowfield 936, cathode substrate 938 and cathode catalyst 940 in a similar manner. An exemplary pair of cells in a stack are shown where fluid connections 928 and 934 provide water to the electrolyzer stack anodes and remove water and bubbles from the anodes. End plate 930 provides fluid and electrical connection to the first anode flowfield 922. The cathode flowfield 936 is provided with electrical contact and mechanical support from another end plate 942 which provides electrical and fluid connections with the second cathode. Alternatively, additional cells may be placed between the cathode flow field 936 and the end plate 942 if separated with an electrically conducting bipolar plate, like bipolar plate 945 which may also provide suitable fluid channels.

Power for the entire assembly is provided through electrical connections 944 and 946. This method of stacking multiple electrochemical cells in series has the distinct advantage of increasing the applied voltage while allowing the system current to remain a function of the active area of each cell rather than of the total active area. Additional description of this stack arrangement is detailed in U.S. Patent No. 5,460,705 which is incorporated herein by reference.

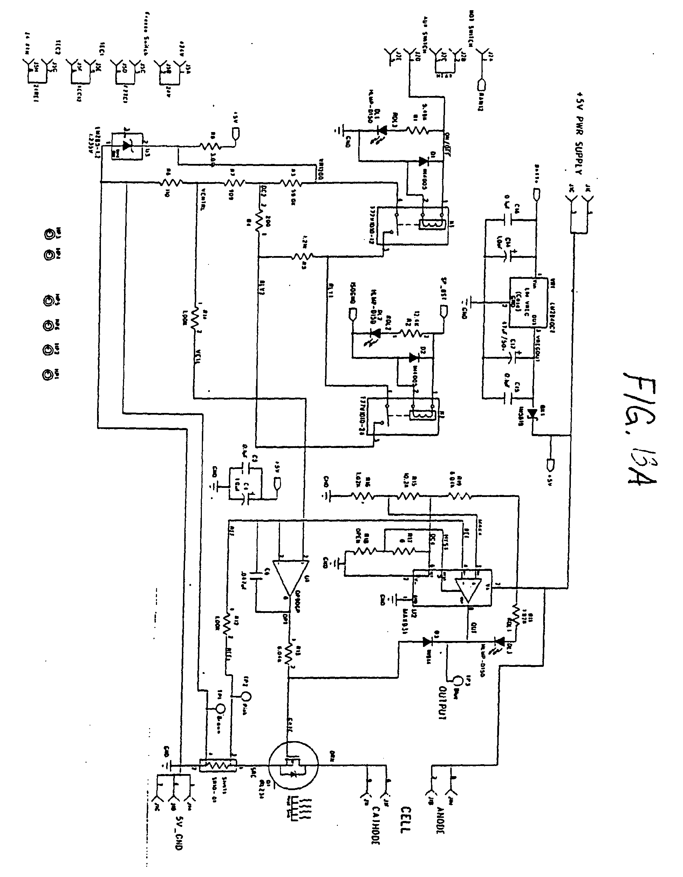

Figure 12 is a schematic diagram of a self-pressurizing ozone generator system. If the desired delivery pressure from the ozone generating system 810 is higher than that of the water source 846, then the system 810 may be operated in a self pressurizing mode with the addition of backflow prevention device 854, a back pressure regulating device 856 and pressure relief solenoid valve 858. Alternatively, these two components 856,858 may be combined into a single solenoid valve that is designed with a suitable orifice and closing force so that the single solenoid valve is forced open by the gas pressure when the desired system pressure is reached. This alternate valve will then maintain the system pressure at or near the cracking pressure of the valve.

To fill the anode reservoir 818 with water in the self-pressurizing system, the pressure in the anode reservoir 818 is relieved by opening the pressure relief solenoid valve 858. When the anode reservoir pressure drops below the water source pressure, water is allowed to flow freely from the water source 846 into the anode reservoir 818. Water is allowed to enter the anode reservoir 818 over a suitable period of time or until a sufficient amount of water is indicated. The pressure relief valve 858 is then closed and the pressure within the anode reservoir rises as gas is formed at the anode and confined within the anode reservoir 818. The back pressure regulator 856 or high cracking pressure solenoid valve 858 described earlier, operate to maintain the desired working pressure. This system is sufficient for regulating the pressure of either ozone gas being delivered to an ozone gas consuming process through line 860, ozonated water being delivered to an ozonated water consuming process through line 862, or hydrogen gas being delivered through line 841. Alternatively, this pressure control system 856,858 may be eliminated if suitable control is provided by an ozone consuming process (not shown). It should be recognized that any number of suitable methods of maintaining and relieving the system pressure could be devised by someone skilled in the art.

The anode reservoir 818 or cathode phase separator 820 may also be provided with a means of preventing hydrostatic pressures from increasing to catastrophic values during periods when all gases are eliminated from the anode reservoir 818 and the cathode phase separator 820. During these periods of time, the bubbles formed at the anode and cathode must displace a portion of the water that is in the already full anode reservoir 818 and cathode phase separator 820. The additional system volume required by these bubbles may be provided by a captive gas system 866, such as an inverted U-tube 870 whose ends 868,872 are situated so as to provide a gas chamber 866 during initial filling of the anode reservoir 818. Any number of equivalent methods of pressure relief from the liquid side of the membrane, including conventional pressure relief valves, may be envisioned. However, the simple gas chamber 866 is preferred, because it is unlikely to fail, involves no machining or welding, and may be placed in either the anode reservoir or cathode phase separator during fabrication. The U-tube 870 may be supported by allowing the bottom of the long leg 868 to rest near the bottom of the anode reservoir 818. The short leg 870 allows the gas chamber 866 to be re-established each time the water level in the anode reservoir 818 drops below the level of the opening 872. More preferably, the captive gas system may comprise a gas trap 837 in fluid line 839 or any fluid line in communication with the anode reservoir 818. Additionally, a safe-failing over pressure device such as a rupture disk 874 may be included to prevent equipment damage should the normal methods of pressure relief fail. Alternatively, the natural breakthrough pressure of the hydrophobic membranes may be used to prevent catastrophic failures due to overpressure within the system.

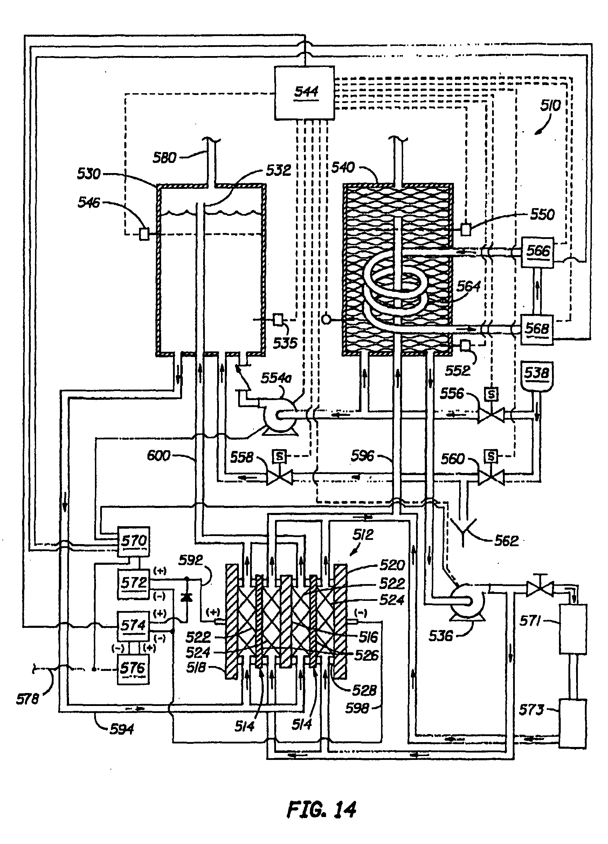

Figure 14 is a schematic diagram of a self-controlled ozone generator 510 which operates solely on electricity and water, preferably either deionized, distilled, or reverse osmosis (RO) water. The heart of the ozone generator 510 is a stack 512 of electrolytic cells (two shown) 514 separated by bipolar plates (one shown) 516 and sandwiched between a positive end plate 518 and a negative end plate 520. Each of the two cells 514 have an anode compartment 522 and a cathode compartment 524 separated by a proton exchange membrane 526. The cells are constructed in a generally similar manner as those cells described in U.S. Patent No. 5,460,705, which description is incorporated by reference herein, with the primary differences being set out above. The flow of fluid in and out of the anode and cathode compartments is schematically shown in Figure 14 as passing through framing members 528 for purposes of simplicity. However, it should be recognized that the fluids may actually pass through manifolds formed by adjacent framing members 528, bipolar plates 516, proton exchange membranes 526 and the like which communicate the fluid to openings in the end plates 518, 520.

The anode compartment 522 is shown receiving water from an anode reservoir 530. The anode reservoir 530 also serves as a liquid/gas separator wherein oxygen and ozone generated in the anode compartment 522 diffuses from the water and collects at the top of the reservoir 530. The reservoir 530 preferably includes a stand pipe 532 which enhances the liquid/gas separation.

The water in the anode reservoir 530 is gravity fed back to the anode compartments 522. As water is consumed by the electrochemical reaction which produces oxygen and ozone, water may be added to the anode reservoir from a deionized water source 538 or from the cathode reservoir 540, as will be described in greater detail below.

The cathode reservoir 540 holds deionized water which rises from the cathode compartments 524. The cathode reservoir 540 also serves as a liquid/gas separator wherein hydrogen generated in the cathode compartments 524 diffuses from the deionized water and collects at the top of the reservoir 540. The wet hydrogen passed through the cathode reservoir can be collected and used or flared.

The anode reservoir 530 and the cathode reservoir 540 are preferably in communication with each other and a source of deionized (DI) water 538. While these components may be communicated in a variety of ways, it is preferred that the system remain simple and include a minimal number of valves and couplings. One preferred configuration is shown in Figure 14 having tubing that includes a first shut-off valve 554 between the reservoirs 530, 540 and a second shut-off valve 556 between the DI water source 538 and the cathode reservoir 540. It is also preferred to have tubing that provides a drain loop having a third shut-off valve 558 between the anode reservoir 530 and the drain 562 and a fourth shut-off valve 560 between the DI source 538 and the drain 562 for bypassing the first and second shut-off valves in order to flush or drain the system. These three solenoid valves 556,558,560 and the four level sensors 535,546,550,552 are used to maintain the water level in the two reservoirs 530,540.

A cooling member 564 is disposed in a thermal relationship with the water in the cathode reservoir 540. A cooling fluid is circulated through a cooling cycle that includes a condenser 566 and a compressor 568. While only about three windings of the cooling coil 564 are shown in this schematic view, any number of windings may be used to accomplish sufficient cooling to maintain a desired water temperature. The preferred heat exchanger is a spirally wound parallel plate freon/water exchanger such as those available from Elanco, Inc. of Newark, Delaware.

The ozone generator 510 also includes a main power supply unit 570 and a power converter 572 for converting AC current to DC current for operation of the array of electrolytic cells 512. The main power supply unit 570 preferably provides electrical power to all electrically powered devices in the generator 510 through appropriate electrically conducting wires. The generator 510 preferably includes a battery 574 which is used to backup the main power supply unit 570 during electrical interruptions and to provide smooth DC power to the system controller 544. The battery 574 is preferably continuously charged by a battery charger 576 in order to maintain the battery 574 at a full charge. The main power supply unit 570 and the battery charger 576 are directly connected through electrical line 578 to some external source of AC electrical power, such as a standard household electrical line or a gasoline powered generator for remote use. The current output of the battery backup is significantly less than the main power supply. This minimum current may range from about 1 amp down to about 1 milliamp or less.

The ozone generator 510 is preferably self-controlled by a system controller 544 which receives various signals from sensors and switches and sends control signals to valves, pumps, switches and other devices shown in Figure 14. The system controller 544 executes system control software stored in a memory. The software is programmed to monitor the various signals indicating the operating conditions of the system and to control various devices in accordance with those conditions. It should be recognized that the programming of the system controller may take on any of a great number of schemes within the scope of the present invention and include additional, non-essential programming, such as system diagnostics, communications, data storage and the like. Further, the system may include additional devices and monitors not shown or described herein, such as an on/off switch.

During operation of the ozone generator 510, the DI water source 538 preferably provides water at a pressure higher than the normal operating range of the anode reservoir 530 and the cathode reservoir 540 so that deionized water can be added to the system during normal operation. Reservoirs 530, 540 are preferably designed to operate in a range between about 0 and about 30 psig, and deionized water is conveniently provided to the system at about 50 psig. During initial start-up of the generator, the valves 554, 556 connecting the reservoirs 530, 540 and the DI water source 538 are open, but the valves 558, 560 leading to a system drain 562 remain closed. Deionized water fills the anode compartments 522 and the cathode compartments 524. Providing additional DI water into the system raises the level of water in either reservoir 530, 540 to the high level sensors 546, 550 by letting trapped air escape from the reservoirs 530, 540, respectively, to maintain system pressure below about 30 psig. When the reservoirs are filled, the flow of deionized water is stopped by the second shut-off valve 556. Recirculation of water in the cathode reservoir 540 by the pump 536 and cooling of the water within the reservoir 540 by the cooling member 564 will preferably occur when electric current is applied to the array of electrolytic cells 512. The transfer pump 554a will cycle so that water carried through the proton exchange membranes 526 from the anode compartments 522 to the cathode compartments 524 can rise into the cathode reservoir 540 and eventually be returned to the anode reservoir 530.

The DI water source 538 may comprise any makeup water source, such as potable water, and a water purifying system. One preferred purifying system suitable for use with potable water includes a carbon filter bed followed by an ion exchange resin bed. It is also preferred that at least a portion of the cathode water loop be circulated through a purifying system in order to maintain the quality of the recirculating water in the cathode loop. One preferred purifying system suitable for use in the cathode loop includes a carbon filter bed 571 followed by an ion exchange resin bed 573.

The system of Figure 14 shows a main cathode water loop including a cathode reservoir 540, a recirculation pump 536, a heat exchanger 564 and the electrolyzer 512. The system may further include a side loop in communication with the main cathode water loop, wherein the side loop directs a portion of the recirculated water through a purifying system, preferably comprising the carbon filter bed 571 (primarily to destroy and ozone that may be in the water) and the ion exchange bed 573.

The heat exchanger or cooling member 564 is shown as a coil of tubing that circulates a cool fluid from a refrigeration system comprising a compressor 568 and a condenser 566. It should be recognized that the cooling member may be any of a number of various designs known in the art and may include various support components or utilities (not shown). The cooling member or system may control the temperature of the water in cathode water loop in various manners, such as cycling a condenser unit on and off according to a thermocouple in thermal communication with the cathode water or any other portion of the system, including the anode where much of the heat is generated.

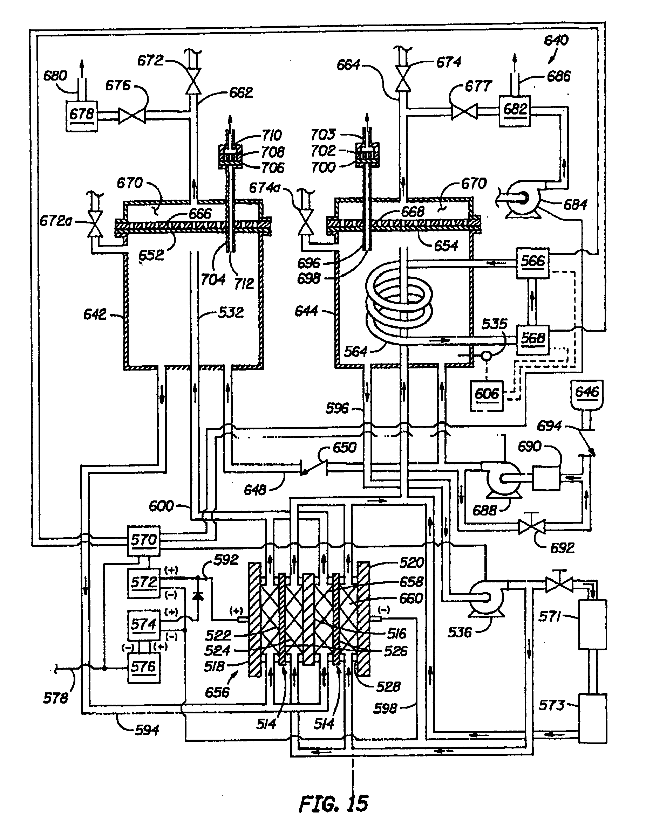

Figure 15 is a schematic diagram of an alternate ozone generator 640 which operates without a controller, valves or level sensors. The ozone generator 640 performs a similar process as the ozone generator 610 of Figure 14, but has been modified to operate in a completely passive manner without the requirement of a control system, valves, or level sensors. The generator 640 eliminates all solenoid valves (or float switches) 556, 558, 560, a pump 554a, all level sensors 535, 546, 550, 552 and the control system 544 that are part of generator 510 of Figure 14.

The passive generator system 640 provides all water handling requirements and maintains a full water level in the anode reservoir 642 and cathode reservoir 644. These reservoirs 642, 644 are both placed in direct communication with the deionized water source 646. The fluid line 648 between the cathode reservoir 644 and the anode reservoir 642 is small in diameter to provide a sufficiently rapid fluid flow from the cathode reservoir 644 to the anode reservoir 642 so that ozone dissolved in the anode water is not allowed to diffuse into the cathode reservoir 644. A back flow prevention device 650 prevents water or gas flow from the anode reservoir 642 to the cathode reservoir 644.

Water may be held in the reservoirs using hydrophobic membranes or phase separators 652, 654 that prevent the liquid water from escaping out of the tops of the reservoirs 642, 644. These hydrophobic phase separators 652, 654 provide a barrier to water in its liquid state, but allows the free transmission of gases such as water vapor, hydrogen gas, oxygen gas, and ozone gas. The separators 652, 654 allow water from the deionized water source 646 to displace any gases in the reservoirs 642, 644 during initial filling. After all the gases are eliminated from the reservoirs 642, 644 and the water is in direct contact with the hydrophobic membranes 652, 654, then the transfer of water ceases as the pressures in the reservoirs 642, 644 equalize with that of the water source 646. The water in each reservoir 642, 644 continuously remains at this level during all phases of operation so long as the supply of water is maintained. Pressure relief valves 672a and 674 a are preferably provided to relieve high water pressure before damaging the hydrophobic membrane.

During normal operation of the ozone generation system 640, gas bubbles are generated in the electrolyzer 656 and then transferred to the water reservoirs. Oxygen and ozone gas bubbles generated in the anode compartments 658 of the electrolyzer 656 are transferred to the anode reservoir 642 and hydrogen gas bubbles generated in the cathode compartments 660 are transferred to the cathode reservoir 644 where the gas bubbles rise to the top surface of their respective reservoirs into contact with the hydrophobic membranes 652, 654. The hydrophobic membranes provide little or no restriction to the transmission of gas and water vapor from inside the reservoirs, at elevated pressure, to the vent lines 662, 664. The separators 652, 654 are suitably supported by support structures 666, 668 which provide free flow of gas and any condensed liquid, but provide sufficient support of the membranes so that pressure differentials between the water in the reservoirs and the gas in the vent lines may possibly exceed about 100 psi. The membrane 652 and the support 666 are in turn provided with mechanical support and liquid and gas sealing by the vessel top 670. The ozone/oxygen vent 662 is in direct communication with the dry side of the membrane 652 allowing the gas previously contained in the bubbles to leave the anode reservoir. Likewise, the hydrogen vent 664 is in direct communication with the dry side of its membrane 654 allowing the hydrogen gas previously entrained in bubbles to leave the cathode reservoir 644.

A pressure regulator 672 may be added to allow the pressure of the oxygen and ozone gas on the dry side of the membrane 652 to reach any value up to the pressure of the liquid within the vessel 642. In a similar manner, a pressure regulator 674 may be added to the hydrogen vent 664 to control the hydrogen delivery pressure. The pressure regulators 672, 674 may be operated independently of each other allowing the gases from the anode reservoir 642 and the cathode reservoir 644 to be regulated individually at gas pressures from sub-ambient up to the pressure of the water which is common to both the anode reservoir 642 and the cathode reservoir 644. Overpressure regulators 676, 678 may be added to prevent overpressurizing the system in the event that the main discharge vents 662, 664 become blocked or surplus gas is produced. Additional pressure relief valves 672a, 674a prevent the water pressure in the reservoirs from exceeding design limits. Ozone exiting the pressure release valve 676 may be destroyed using a catalytic destruct unit 678 before the gas is released through vent 680 to the atmosphere. Surplus hydrogen, or that resulting from over pressure gas, may be destroyed in a catalytic destruct unit 682 that reacts the hydrogen gas with oxygen from the air provided by an air pump 684. The resulting water vapor and surplus air is released through a vent 686 to the atmosphere. The two destruct units 678, 682 may be placed in thermal communication with each other so the waste heat from the hydrogen/oxygen combination reaction will assist in the destruction of the ozone gas.

An optional boost pump 688 may be added between the deionized water source 646 and the water reservoirs 642, 644. To further condition the water, a resin bed 690 may be added to the water source line. It is preferred to further include a return loop containing flow rate adjusting means 692 in order to continuously polish the incoming water. A back flow prevention device 694 is useful to prevent water from returning to the source 646.

An auxiliary vent system in the cathode reservoir 644 prevents the transfer of hydrogen gas from the cathode reservoir 644 to the anode reservoir 642 in the event of an interruption of the water supply. This is accomplished using a dip tube 696 that extends downward in the cathode reservoir 644 to a point 698 above the bottom of the reservoir which defines the minimum acceptable water level. The dip tube 696 extends upward out of the reservoir and communicates with a hydrophobic membrane 700 with suitable support and housing 702. When the water level is above point 698 and the reservoir is under pressure, water forces any gas in the tube 696 through the hydrophobic membrane 700 and out the vent 703 which is at atmospheric pressure or below. Should the water in the cathode, reservoir drop below point 698, the water presently in the tube will drain back out of the tube 696 into the reservoir 644 allowing the gas within the cathode reservoir 644 to escape up the dip tube and out the vent 703. In this manner, the pressure in the reservoir 644 is reduced down to ambient pressure to prevent any further transfer of liquid from the cathode reservoir to the anode reservoir.

The anode reservoir 642 preferably includes a similar auxiliary vent system having a dip tube 704, hydrophobic phase separator 706, housing 708, and vent 710. Through some event, such as pressure fluctuations in the incoming water, if the pressure in the anode reservoir 642 is higher than the pressure in the cathode reservoir 644, then the pressure driven transfer of water from the cathode reservoir to the anode reservoir will stop. When the water level in the anode reservoir falls below the lower opening 712 of the dip tube 704, the pressure within the anode system is reduced and the pressure driven water transfer from the cathode reservoir to the anode reservoir is reestablished.

The rest of the system 640 may remain unchanged from that of generator 510 of Figure 14. Therefore, system 640 may include a cathode recirculation pump 536, a power supply 570, a cooling system 566, and a standpipe 532. The cooling system 564, 566, 568 may be operated by an electrical or mechanical temperature controller 606 and a temperature sensor 535 in direct communication with the condenser system and the body to be temperature regulated, shown as the anode reservoir water in Figures 14 and 15 but which body may be the anode end plate or any other location representative of the electrolyzer temperature. The power supply unit 570 may also operate in an autonomous mode with self-control of the power output to match ozone demand. A thermal cut out switch may be utilized to remove power from the electrolyzer should a threshold temperature be exceeded.

Ozone gas is preferably generated by an electrolytic method which offers both process and cost benefits. In the electrolytic method, ozone is generated by the electrolysis of water using a special electrolytic cell. Sources of electrical power and water are the only requirements for producing O₃ electrochemically. Unlike the ozone gas produced by the corona process, electrolytically generated ozone does not contain toxic by-products. The electrolytic reactions occur by applying DC power between the anode and cathode which are placed on either side of a proton-exchange membrane (PEM), preferably a perfluorinated sulfonic acid polymer membrane (such as NAFION 117 available from DuPont de Nemours, Wilmington, Delaware). Water is fed to the anode catalyst where water oxidation takes place resulting in both the thermodynamically favored O₂ evolution reaction and the O₃ formation reaction.

Utilization of high over potentials and certain electrode materials selectively enhance O₃ formation at the expense of O₂ evolution. The water oxidation reactions yield protons and electrons which are recombined at the cathode. Electrons are conducted to the cathode via the external circuit. The protons and electrons are recombined at the cathode in the presence of water to form hydrogen gas.

The use of a PEM instead of a liquid electrolyte offers several advantages. First, fluid management is simplified and the potential for leakage of corrosive liquids is eliminated. Second, the PEM/anode interface provides a chemical environment which is well-suited to the electrochemical O₃ reaction. A PEM based on a fluoropolymer, such as a perfluorinated sulfonic acid polymer, displays very high resistance to chemical attack.

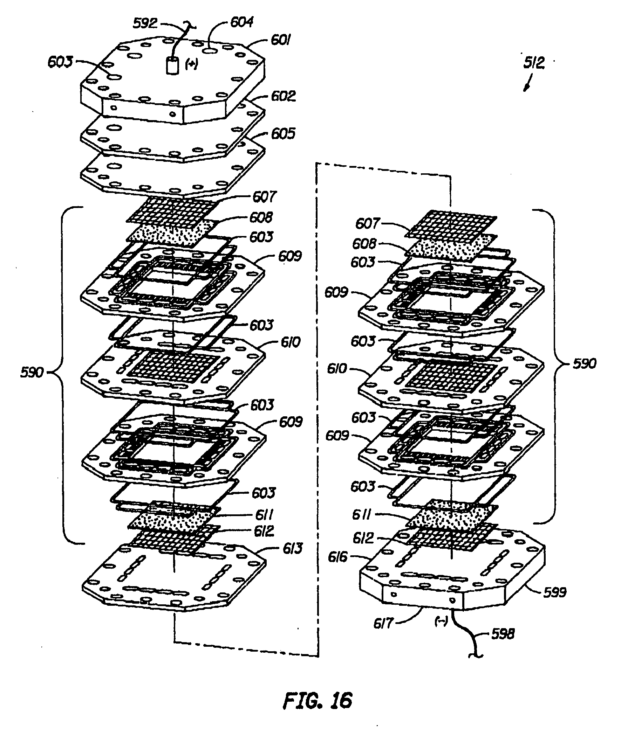

Figure 16 is an exploded perspective view of the electrolytic cell stack 512 for the production of ozone. The cell stack 512 may include any number of individual cells, but is shown here with two cells 590 which are similar in construction and operation. Each cell 590 comprises an expanded titanium flowfield 607, a porous titanium member 108 having a lead dioxide catalyst deposited on its surface facing the PEM 610, and a cell frame 609 disposed around the flowfield 607 and member 608. The PEM 610 may be either coated with a cathodic catalyst, such as platinum, facing the porous stainless steel sheet 611 or be placed in contact with a carbon fiber paper (not shown) that has the cathodic catalyst formed thereon. A porous stainless steel sheet 611 is placed against the cathodic catalyst surface, followed by a rolled, expanded stainless steel flowfield 612 which may include a plurality of sheets. Another cell frame 609 is disposed around the sheet 611 and flowfield 612. A bipolar plate 613 is disposed between the two cells 590 to allow electronic conduction between the adjacent stainless steel flowfield 612 and the adjacent titanium flowfield 607. The system may include an additional bipolar plate 605 and a flowfield 602 between the anode flowfield 607 and the end plate 601 of the electrolyzer to eliminate contact of the end plate 601 with ozone. While not shown, the plate 605 and flowfield 602, or some other intermediate member, may be used with both endplates to eliminate contact of the endplates with the same or different fluids within the cell.

The two endplates 601, 616 are drawn together to compress all the components of the electrolytic cell stack 512 into a filter press type arrangement in which adjacent components are in intimate contact. The cell frames 609, membranes 610, bipolar plate 613, the current collector face plate 616, and the like are sufficiently compressed to provide a sealing engagement and collectively form manifolds for the delivery and withdrawal of fluids in the cell stack 512.

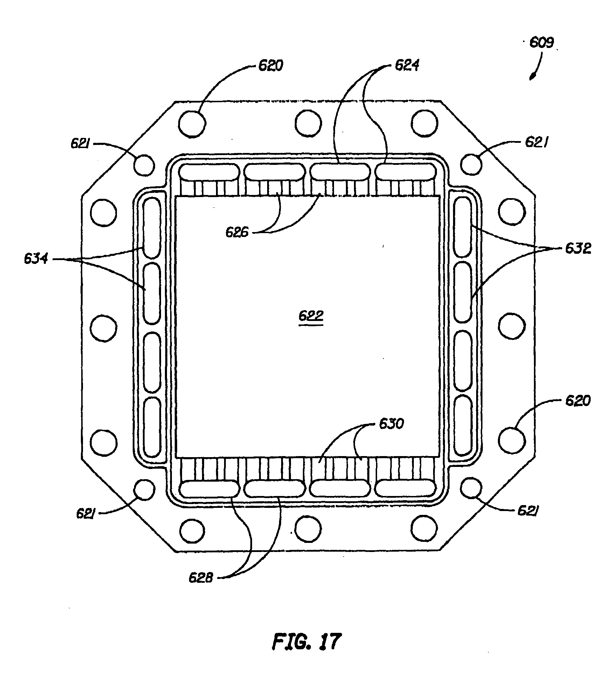

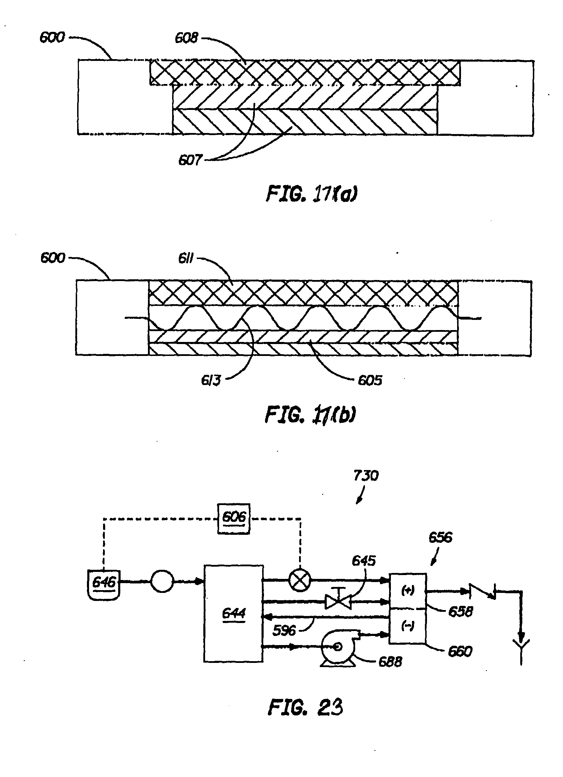

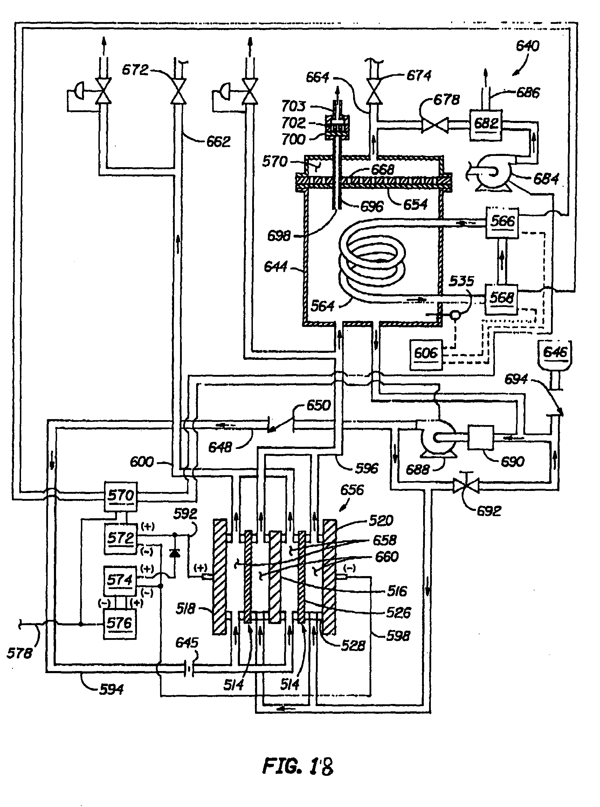

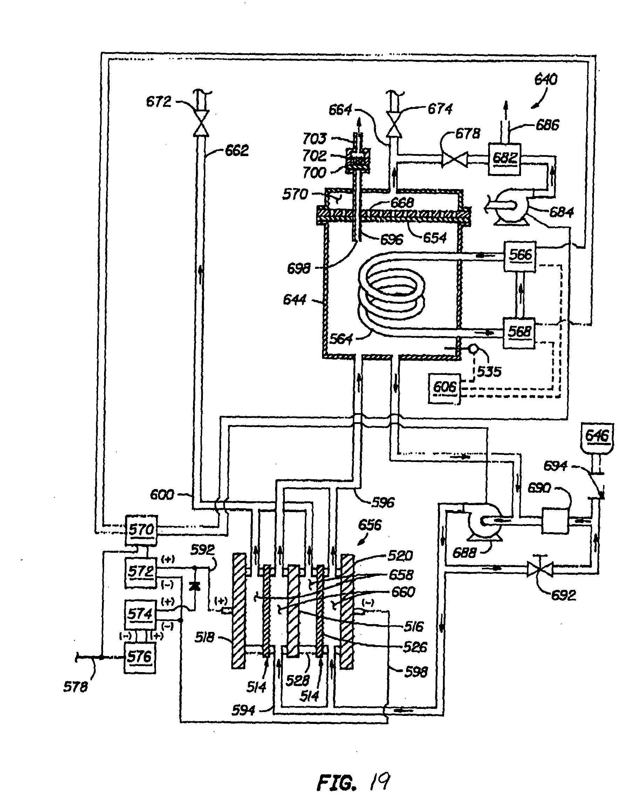

Figure 17 is a front view of the cell frame 609 suitable for use in the electrolytic cell of Figure 16. The cell frame 609 has a plurality of bolt holes 620 and alignment holes 621 around its perimeter edge for aligning and securing the cell frame in place with adjacent membranes 610, bipolar plates 613 or current collector face plates 606. The cell frame 609 has a center region 622 that is open to receive a flowfield and electrode, such as the expanded titanium flowfield 607, the porous titanium sheet 608 and the electrocatalyst formed on the sheet 608. A first manifold is provided by the row of holes 624 which may, for example, supply water to the center region 622 through the slots 626. The water flowing through the center region 622 is then preferably collected in the opposing manifold, which is comprised of the holes 628 and slots 630, and withdrawn from the cell stack. It should be recognized that the holes 624, 628 in both manifolds are lined up with and communicate with similar holes through adjacent components of the cell stack 512 (See Figure 16). In the example just given, the water is delivered through holes 628 and slots 630 and passed through the titanium flowfield 607 and the porous titanium sheet 608 to the electrocatalyst where oxygen and ozone are produced. The ozone containing water is withdrawn through the slots 626 and holes 624 out of the cell stack to the anode reservoir. Conversely, the manifold formed by holes 632 and the manifold formed by holes 634 allow passage of fluids therethrough to another cell frame (not shown), such as a cell frame around a stainless steel flowfield 612 and a porous stainless steel sheet 611.

Figure 17a is a cross-sectional view of a frame formed around several components of a cell. The frame 609 may be used to secure a titanium frit or felt member 608 and a flowfield or plurality of flowfields 607 together in a common subassembly. In this manner, intimate contact between the member 608 and the flowfields 607 is maintained while avoiding slippage or rubbing therebetween. Movement of the frit 608 can result in a shearing force acting upon the membrane 610 (See Figure 16) positioned against the frit 608. Preferably, the frit is inserted into an injection molded frame to provide an absolutely flush and flat surface against the membrane. Alternatively, the frame may be provided with a ledge to hold the frit from moving.

Figure 17b is a cross-sectional view of an alternate frame 609 formed around several components of a cell. The frame 609 is shown here securing titanium felt 608a (cathode side), a perforated metal sheet 608b to support the felt, a corrugated bipolar plate 613 and a porous titanium sheet 611 (anode side). Alteratively, the titanium felt 608a and sheet 608b may be replaced by a titanium frit. To reduce component cost and minimize component count, the bipolar plate is preferably textured or corrugated and molded into the frame. The textured or corrugated plate 613 provides rigid support between members 608a/b and 611 while also providing a flowfield on both sides of the plate 613. The frame is molded with flowchannels communicating with the flowfields on both sides of the plate 613. The plate would then function as both a bipolar plate and as flowfields for both the anode and the cathode.

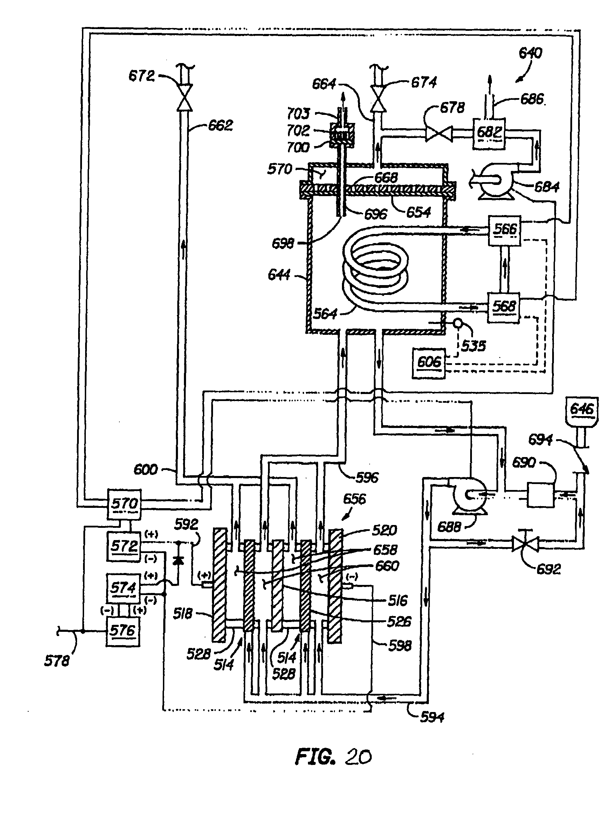

Figure 18 is a schematic diagram of the passive ozone generator 640, as in Figure 15 except that it operates without the anode reservoir 642 and associated piping and instruments. Instead of the anode reservoir, the generator 640 provides water to the anodes 658 from the cathode reservoir 644. A flow restriction or orifice 645 is disposed within the tubing 594 to limit the amount of water being delivered to the anodes 658. Preferably, the orifice 645 provides water transfer from the cathode loop into the anode loop at a well characterized rate sufficient to keep the anode full of water under all operating conditions, particularly accounting for water consumed by ozone production, water electroosmotically transported to the cathode and water vaporized into the ozone gas stream. Furthermore, it is preferred not to provide so much water to the anodes that water will pass into the outlet tubing 600 and out the valve 672 along with the ozone gas.

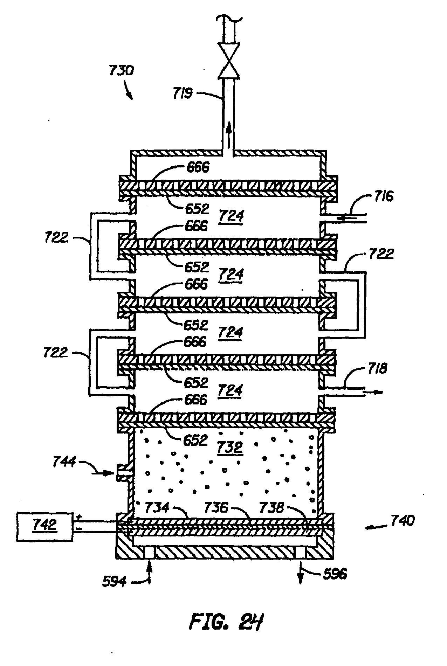

Figure 23 is a partial schematic diagram of an ozone generator 730 having an orifice 645 disposed between the cathode reservoir 644 and the anode 658 and an anode flushing system. The orifice 645, as in Figure 18, provides water to the anode as it is utilized. Since there is little or no water flowing out of the anode compartment 658, contaminant may accumulate over time and reduce production of the cell. The anode flushing system allows the anode compartment 658 to be flushed periodically by bypassing the orifice 645 or otherwise providing a flow of fluid.

Figure 19 is a schematic diagram of the passive ozone generator 640, as in Figure 18 except that it operates without any direct supply of water to the anodes 658, but rather relies upon back diffusion of water from the cathodes 660 to the anodes 658. In this embodiment, the water tubing 594 and the orifice are eliminated, thereby reducing the amount of equipment and further simplifying the operation of the generator. Because the cathode loop comprising the inlet tubing 594, the cathodes 660 and the outlet tubing 596 are maintained water full, the supply of water in the cathodes 660 should always be available for back diffusion to the anodes 658. It is preferred that the water in the cathode loop is circulated, most preferably continuously circulated.

Figure 20 is a schematic diagram of the passive ozone generator 640, as shown in Figure 19 except that it further provides for water to be supplied directly to the proton exchange membrane 514 which is tubulated. The tubulated membranes are beneficial to provide more water to the anode catalyst than by mere back diffusion from the cathodes 660. It is important that sufficient amounts of water be supplied to the anode to provide water for the ozone production reaction, account for water losses due to electroosmosis from the anode to the cathode, and prevent drying of the membrane which causes the electrical resistance in the membrane to increase.

As previously discussed, it is useful in many applications to have an ozone containing water stream. In some of these applications, it is necessary that the ozone containing water stream comprise high quality water and/or be free from certain contaminants. For example, ozone may be introduced into a drinking water stream or a rinse water stream for semiconductor fabrication in order to oxidize any contaminants therein. While an ozonated anode water stream could be used, the anode water source may not be of sufficiently high quality or purity or the ozonated anode water may pick up contaminants, such as lead, from the electrolyzer itself. Therefore, in accordance with the present invention, ozone may be disengaged from the anode water and then re-engaged with a second water source of suitable quality. Disengagement provides an ozone gas stream free of all non-volatile contaminants, such as lead, particulates and other organics or inorganics. Re-engagement into the second water source then provides the desired process stream.

Disengagement and re-engagement may be accomplished by keeping the anode water physically separated from the process water with either a vapor gap or a hydrophobic membrane. The distribution of contaminants, such as lead, within the process water, or the process in which it is used, is thereby eliminated.

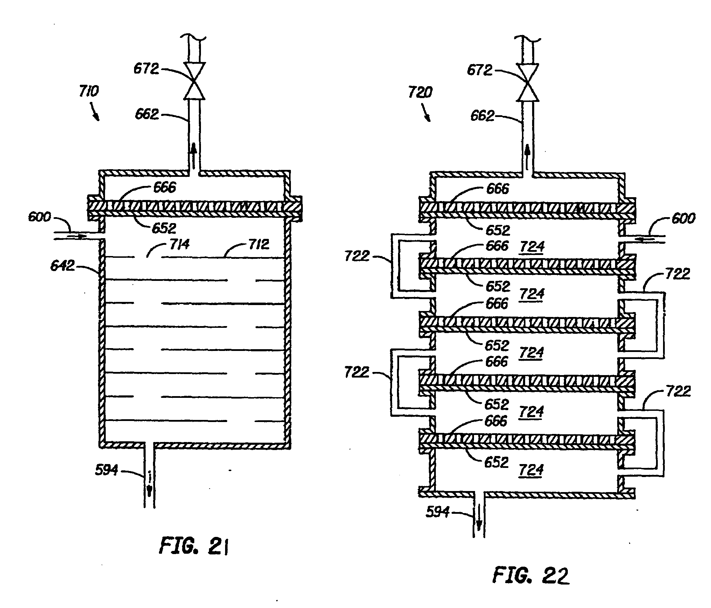

Figure 21 is a cross-sectional view of an ozone engaging or re-engaging system 710 having internal baffles 712 and internal openings or channels 714 designed to provide contact between ozone gas and the process water contained therein. Preferably, the ozone and water streams are provided in a counter-current flow with the water flowing downward and the ozone gas bubbles having a tendency to rise. The baffles 712 may be designed in any variety of ways known in the art, but preferably will reduce or prevent circulation of the water stream introduced through line 716 within the system 710 so that an ozone concentration gradient can be established with the highest concentrations of ozone being contained in the water in the lower portion of the system 710 where the ozonated water is withdrawn through the outlet tubing 718. The baffles 712 resist a substantial portion of natural circulation currents that may be caused by temperature gradients, rising ozone bubbles, water flow and the like. However, the ozone gas bubbles are allowed to slowly rise through the channels 714 to the top of the system 710. Excess ozone rises through the water to the membrane 652 which allows the ozone to pass therethrough and exit through line 719 for disposal or reuse.

Figure 22 is a cross-sectional view of another ozone engaging or re-engaging system 720 having multiple internal hydrophobic membranes 652 and external water flow members 722. The hydrophobic membranes 652, preferably each supported by a perforated plate 666, define intermediate chambers 724 which are water full. Water enters the upper chamber 724 from a water source through tubing 716. Ozone gas is allowed to pass through the membranes 652 into the next higher chamber 724. The ozone gas continues upward in this manner, passing through each membrane 652 and, if the ozone is not ultimately engaged in the process water, out the line 719. Conversely, the process water flows downward through the chambers 724 and can only rise or fall between chambers 724 through the external water flow members 722. In this manner, circulation of water throughout the system 720 is reduced or eliminated while allowing ozone to pass through the reservoir. Furthermore, an ozone concentration gradient may be established with the highest ozone concentrations being maintained in the water in the lower chambers 724 where it is withdrawn for use through tubing 718. It should be recognized that other configurations and methods may be used to achieve reengagement of ozone in water, for example through the use a packed column.

Figure 24 is an integrated ozone disengagement and re-engagement system 730. The system 730 operates in a similar manner as system 720 of Figure 23, except that it is in direct fluid communication with an anode reservoir 732, preferably in direct fluid communication with an anode 734 of an electrochemical cell 740. The electrochemical cell 740 is a PEM cell having the anode 734, a proton exchange membrane 736 and a cathode 738, with the anode and cathode being in electronic communication with the positive and negative terminals of a power supply 742. In this and other similar arrangements, water is freely provided to the anode and water, ozone and oxygen are free to flow away from the anode into the anode reservoir. This arrangement provides free flow of water assisted by natural forces of thermal gradients and the buoyancy of gas bubbles generated at the anode. A water source is preferably in communication with the anode reservoir 732 through a small diameter tubing to reduce or eliminate the amount of ozone lost through diffusion out of the system.

The ozone in the anode reservoir 732 is allowed to pass through the hydrophobic membrane 652 along the top of the reservoir into the process water within the adjacent chamber 724. However, since the membrane is hydrophobic, the anode water and any nonvolatile contaminants will remain in the reservoir 732. The ozonated process water in the system 730 exits through line 718. It should be recognized that the cell 740 may provide direct fluid communication with any other form of ozone engagement system, including baffles, packing and the like, so long as the anode water is kept separate from the process water.

### Example 1

An ozone generator was designed in accordance with Figures 1, 3 and 4 to produce about 5 pounds (2.26kg) per day of ozone from about 5 gallons (18.9 dm²) per day of deionized water. A stack of 10 electrolytic cells were used to generate a continuous output of about 7 liters/minute of a wet oxygen stream having about 15 wt% of ozone. Each cell had an active area of about 100 square centimeters. The anode flowfield was provided by three rolled, expanded sheets of titanium and a layer of sintered titanium in electrical contact with the expanded titanium. The sintered titanium layer had a thin layer of a lead dioxide catalyst deposited onto its surface and the lead dioxide was placed in face-to-face contact with a proton exchange membrane (PEM). The PEM was a sheet of perfluorinated sulfonic acid polymer, NAFION 117. The cathodic electrocatalyst was provided by a carbon fiber paper impregnated with a platinum catalyst. The fiber paper was placed against the second side of the PEM. The cathode flowfield was then assembled adjacent the carbon fiber paper and included a sheet of compressible, stainless steel felt, a perforated stainless steel sheet, and three sheets of rolled, expanded stainless steel where the diamond shaped openings of the three sheets were oriented 90 degrees from each adjacent sheet.

The anode reservoir and cathode reservoir were made from cylinders of borosilicate glass (PYREX® glass available from Coming Glass Works, Coming, New York) bolted between two stainless steel endplates that were machined to receive the cylinders and communicate with various tubes and devices. The clear cylinder allowed visual inspection of the liquid/gas separation processes carried out therein. Each reservoir was oriented vertically and had a volume of about 2 gallons. The anode water was cooled with about 70 feet of ½ inch diameter tubing disposed in the anode reservoir. The tubing was coupled to a condenser unit rated at 26,900 BTU (28.37MJ) at 100°F (37.7°C) ambient and 35°F(1.66°C) suction temperature (such as model F 3AD-A325, available from Copeland of Sidney, Ohio). The power source received up to 70 amps of 208 volt three-phase current to power the various components. The power converter was a six pulse, midpoint converter consisting of six thyristors (model 110RK180, available from International Rectifier of El Segundo, CA). The system controller provided the thyristors with a phase angle which allowed for an increase or decrease of the power output.

### Example 2

An ozone generator was designed in accordance with Figures 5 and 6 to produce about 5 mg/min of ozone and deliver this as water saturated with ozone under pressure yielding at least 100 mg of ozone per liter of water. A single electrolyzer cell was used having an active area of approximately 5 cm² which stores and delivers 750 ml of water containing 75 mg of dissolved ozone. The anode reservoir was fabricated from titanium tubing 2 inches in diameter and approximately 16 inches long and machined titanium end caps were welded in place. The top end cap had provisions for bolting on a membrane support assembly and a suitable porous hydrophobic membrane was placed between the titanium end cap and a stainless steel membrane support and flow field assembly. The phase separating membrane used was a porous PTFE material available from W.L. Gore and Associates. The end cap welded to the lower end of the anode reservoir was machined to make an open area which provided support for a sintered titanium flowfield coupled to the positive pole of a power source. The side or edge of this end cap included a fitting and a flow channel allowing fluid communication between the anode reservoir and a drain for draining the reservoir. The fitting and flow channel are positioned slightly above the anode so that the anode reservoir cannot be completely drained, thereby reducing the possibility of the anode running dry. The PEM was a sheet of perfluorinated sulfonic acid polymer, specifically NAFION® obtained from Du Pont de Nemours, Wilmington, Delaware. The cathode electrocatalyst was provided by a carbon fiber paper impregnated with a platinum catalyst at a loading of between about 0.1 and about 1 mg/cm². The fiber paper was placed against the second side of the PEM. The cathode flowfield, consisting of a sintered stainless steel frit, was placed in contact with the other side of the carbon fiber paper to provide mechanical support and electrical connection to the cathode catalyst. A stainless steel cap was then bolted to the bottom of the assembly. This end cap provided sealing, flow channels, fluid connections, and electrical connections to the cathode.

The cathode discharge was connected to a second phase separator separate from the anode reservoir and electrolyzer assembly. This second phase separator consisted of a commercially available, 47mm filter holder molded from polytetrafluoroethylene (PTFE), but any other suitable commercial or custom system would be adequate. The same porous Gore membrane used in the anode phase separator was used in the cathode phase separator. The liquid connection of the cathode phase separator was connected to the anode reservoir using a few feet of 1/8" Teflon tubing. The hydrogen connection of the cathode phase separator was connected to the hydrogen destruct using ¼" vinyl tubing obtained under the trade name TYGON from U.S. Stoneware Co., Akron, Ohio.

The gas destruct unit was fabricated from a piece of ½" diameter stainless steel tubing approximately 9 inches long and having two tubing connections, one at the bottom and one midway along its length. This was packed with approximately 2 inches of stainless steel wool followed by 3 inches of platinum coated alumina pellets. The region from approximately 1 inch below the side inlet to 2 inches above the side inlet was packed with stainless steel wool to provide mixing of the ozone with the hot gas from the lower hydrogen destruct system. The remaining volume in the top of this tube was filled with MnO₂-Fe₂O₃ pellets available commercially from Prototech, Inc. of Needham, Massachusetts. Air was provided by a 1 liter per minute diaphragm type air pump such as that available from Apollo Enterprises of Ontario, California. The top end of the destruct was vented to the atmosphere.

Thermal management was provided by two thermoelectric devices, such as model PT6-12-40 commercially available from Melcor of Trenton, New Jersey.To increase the thermal contact area two aluminum cylinders were tightly clamped to the outside of the titanium tubing, a flat was milled to each cylinder, and one thermoelectric was mounted to each flat. A finned aluminum heat sink was mounted to the hot junction of the thermoelectrics allowing waste heat to be transferred to the ambient air. A freeze protection switch was placed in series with the thermoelectric power source. This bimetallic switch opens in the event that the anode reservoir temperature falls close to freezing, turning the thermoelectrics off until the temperature increases above the hysteresis range of the switch.

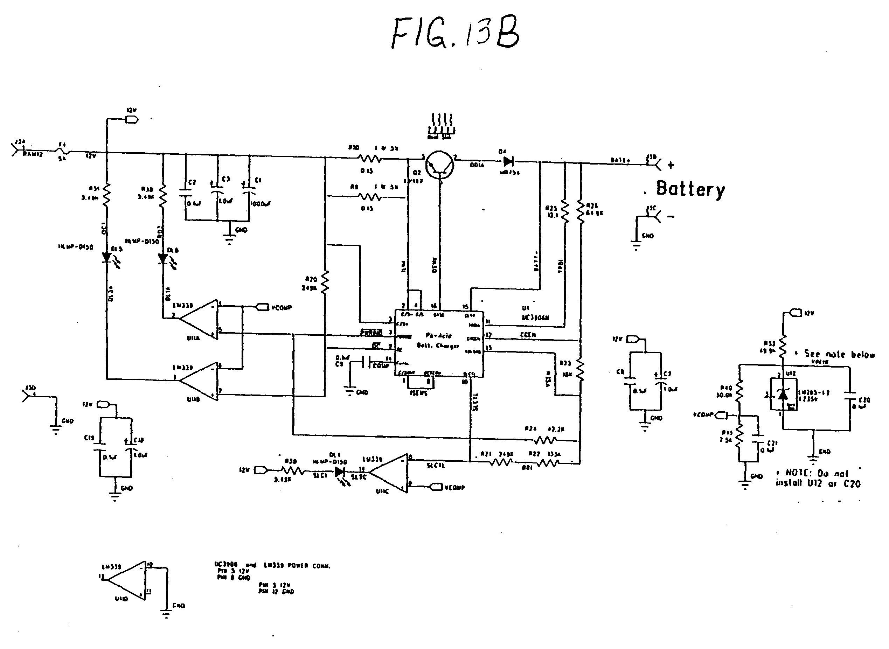

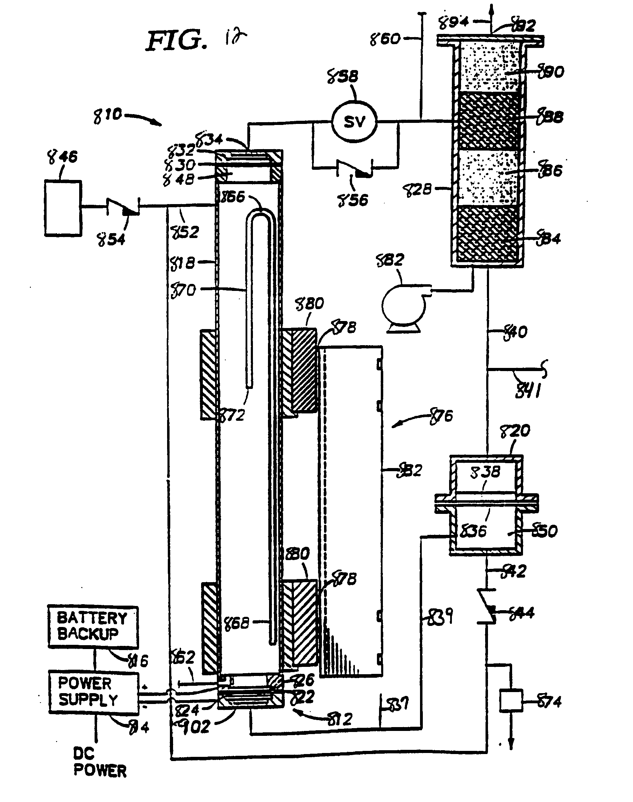

Figures 13A and 13B show a suitable constant current power supply having three output levels to supply power to the electrolyzer. This power supply provides a minimum cell maintenance current of 200 mA, a normal output current of 5 Amps, and a high output current of 10 Amps. An over-temperature bimetallic switch located at the anode places the power supply in the minimum current mode should the anode temperature rise above about 40°C. A second external switch or relay allows the power supply to be placed in the high output mode should additional ozone production be required. The power supply also includes circuitry for battery maintenance and stand-by power operation.

While the foregoing is directed to the preferred embodiment of the present invention, other and further embodiments of the invention may be devised without departing from the basic scope thereof, and the scope thereof is determined by the claims which follow.

Further aspects of the invention considered to form part of the subject matter of this application are set out in the following numbered clauses :
1. An ozone generating system, comprising:
   one or more electrolytic cells comprising an anode chamber and a cathode chamber;
   an anode reservoir in fluid communication with the anode chamber, the anode reservoir comprising a first gas releasing member; and
   a cathode reservoir in fluid communication with the cathode chamber, the cathode reservoir comprising a second gas releasing member.
2. The system of clause 1, wherein the anode and cathode reservoirs each comprise a water inlet port.
3. The system of clause 2, further comprising a water source in fluid communication with the water inlet ports.
4. The system of clause 3, further comprising a water pressure boosting pump in communication with the water source.
5. The system of clause 1, further comprising a water source in fluid communication with the cathode reservoir.
6. The system of clause 5, wherein there is no obstruction to flow from the water source to the cathode reservoir.
7. The system of clause 6, wherein the cathode reservoir is in fluid communication with the anode reservoir.
8. The system of clause 7, wherein there is no obstruction to flow from the cathode reservoir to the anode reservoir.
9. The system of clause 1, further comprising a water cooling member in thermal communication with the anode reservoir.
10. The system of clause 1, further comprising a water recirculating member disposed between the anode reservoir and the anode chamber.
11. The system of clause 1, wherein the anode reservoir has a stand pipe for returning water from the anode reservoir.
12. The system of clause 11, wherein the stand pipe has a small hole for equalizing water levels in the stand pipe and the anode reservoir at low recirculation rates.
13. The system of clause 1, wherein the anode reservoir is in fluid communication with the cathode reservoir.
14. The system of clause 1, further comprising a flow line communicating the anode reservoir and the cathode reservoir.
15. The system of clause 14, further comprising a valve in the flow line.
16. The system of clause 14, wherein the flow line has a sufficiently small diameter to substantially eliminate diffusion of dissolved ozone and oxygen in the anode water into the cathode.
17. The system of clause 14, wherein the flow line has a back flow prevention device to prevent communication of water or gas from the anode reservoir to the cathode reservoir.
18. The system of clause 1, further comprising a flow line between the anode reservoir and the anode chamber, and a pump disposed in the flow line.
19. The system of clause 1, wherein the anode reservoir is elevated above the anode chamber and the anode reservoir inlet communicates with the top of the anode chamber.
20. The system of clause 19, wherein gases generated at the anode rise into the anode reservoir.
21. The system of clause 1, wherein the first gas releasing member is a first valve.
22. The system of clause 21, further comprising a system controller programmed to operate the first valve based on the water level in the anode reservoir.
23. The system of clause 1, wherein the second gas releasing member is a second valve.
24. The system of clause 23, further comprising a system controller programmed to operate the second valve based on the water level in the cathode reservoir.
25. The system of clause 1, wherein one or more of the gas releasing members comprise a hydrophobic, gas permeable member.
26. The system of clause 25, wherein one or more of the hydrophobic, gas permeable members comprises porous polytetrafluoroethylene.
27. The system of clause 1, wherein the first gas releasing member is a hydrophobic, gas permeable membrane.
28. The system of clause 1, wherein the second gas releasing member is a hydrophobic, gas permeable membrane.
29. The system of clause 1, further comprising a pressure regulator disposed in fluid communication with one or more of the gas releasing members.
30. The system of clause 1, further comprising a dip tube having a first end disposed in the cathode reservoir, a second end at nearly ambient pressure, and a hydrophobic, gas permeable membrane disposed between the first and second ends.
31. The system of clause 1, further comprising a dip tube having a first end disposed in the anode reservoir, a second end at nearly ambient pressure, and a hydrophobic, gas permeable membrane disposed between the first and second ends.
32. The system of clause 1, further comprising a battery backup in electronic communication with the electrolytic cells.
33. The system of clause 32, wherein the battery backup is electronically connected in a parallel circuit with a power supply.
34. A process for generating ozone, comprising the steps of:
   (a) electrolyzing water in one or more electrolytic cells comprising an anode and a cathode;
   (b) forming oxygen and ozone at the anode;
   (c) recirculating water between the anode and an anode reservoir;
   (d) separating ozone and oxygen from water in the anode reservoir;
   (e) discharging oxygen and ozone from the anode reservoir;
   (e) forming hydrogen at the cathode;
   (f) receiving water and hydrogen from the cathode in a cathode reservoir;
   (g) separating hydrogen from water in the cathode reservoir; and discharging hydrogen from the cathode reservoir.
35. The process of clause 34, further comprising the step of cooling water in the anode reservoir.
36. The process of clause 34, wherein water from the anode chamber recirculates to the anode reservoir through a stand pipe in the anode reservoir.
37. The process of clause 36, wherein the stand pipe has a small hole for equalizing water levels.
38. The process of clause 34, further comprising the step of adding water to each reservoir as needed to maintain continuous production of ozone.
39. The process of clause 38, wherein water is added tc the anode reservoir from the cathode reservoir.
40. The process of clause 34, wherein the anode reservoir operates at a setpoint pressure and a substantially constant water level.
41. The process of clause 34, wherein the cathode reservoir operates at a setpoint pressure.
42. The process of clause 34, wherein the anode reservoir operates at about 30 psig (206.8 kN/m2) and the cathode reservoir operates at about 40 psig (275.7 kN/m2).
43. The process of clause 34, wherein an oxygen stream comprising from about 10% to about 18% by weight of ozone is discharged from the anode reservoir.
44. The process of clause 38, further comprising the step of continuously supplying water to each reservoir at a pressure above ambient.
45. The process of clause 34, further comprising the step of boosting the gas discharge pressure.
46. The process of clause 34, further comprising the step of individually regulating the gas discharge pressure from the anode reservoir and the gas discharge pressure from the cathode reservoir.
47. The process of clause 34, further comprising the step of transporting water recovered from the cathode to the anode.
48. An ozone generating system according to clause 1 wherein means are provided for recirculating water between the anode and the anode reservoir.
49. An apparatus according to clause 48 wherein the recirculating means comprises a pump adapted to extract water from the anode reservoir and to pump water past the anode, water from the anode being re-introduced to the cathode reservoir.
50. A system according to clause 49 wherein the pump also pumps water from the anode reservoir to the cathode, the cathode being in communication with the cathode reservoir.
51. An ozone generating system according to clause 9 wherein the water cooling member comprises a cooling coil that circulates a cooling fluid through a cooling cycle includes a condenser and a compressor.
52. An ozone generating system according to clause 1 provided with a system controller adapted to receive signals from sensors, and to send control signals to active components of the system.
53. A system according to clause 52 wherein the sensors associated with the controller comprise the level sensor to sense the level of liquid present in the anode reservoir.
54. A system according to clause 52 or 53 wherein the sensor means associated with the controller comprise a sensor to sense the level of liquid present in the cathode reservoir.
55. An ozone generating and delivery system comprising:
   an electrochemical cell having an anode and a cathode; and
   an anode reservoir in communication with the anode, the anode reservoir comprising a gas outlet port and a porous hydrophobic membrane disposed over the gas outlet port.
56. The system of clause 55, wherein the anode forms a portion of the anode reservoir.
57. The system of clause 56, wherein the gas outlet port is disposed in a top portion of the anode reservoir and the anode is disposed in a bottom portion of the anode reservoir.
58. The system of clause 55, wherein the anode reservoir is directly attached to the anode.
59. The system of clause 55, wherein the anode reservoir is directly attached to the anode allowing the free exchange of water and gas bubbles between the anode and the anode reservoir.
60. The system of clause 55, wherein the anode reservoir further comprises a pressure relief member.
61. The system of clause 55, wherein the anode reservoir further comprises a captive gas chamber in fluid communication with the anode reservoir.
62. The system of clause 61, wherein the captive gas chamber is an inverted U-tube disposed in the anode reservoir.
63. The system of clause 61, wherein the captive gas chamber is a gas trap disposed in a fluid line
   communicating with the anode reservoir.
64. The system of clause 55, further comprising a water source in fluid communication with the anode reservoir.
65. The system of clause 64, wherein the water source delivers water into a top portion of the anode.
66. The system of clause 55, further comprising a water source in fluid communication through a backflow prevention device to the anode reservoir.
67. The system of clause 66, further comprising a pressure control device in the gas outlet port.
68. The system of clause 55, further comprising a cooling member in thermal communication with the anode reservoir.
69. The system of clause 68, wherein the cooling member comprises a thermoelectric device in thermal communication with a heat sink.
70. The system of clause 55, further comprising a cathode phase separator in fluid communication with the cathode.
71. The system of clause 70, wherein the cathode phase separator comprises a liquid reservoir, a gas outlet port located at the top of the reservoir and a porous hydrophobic membrane disposed over the gas outlet port.
72. The system of clause 71, wherein the porous hydrophobic membrane of the cathode phase separator allows gas to be separated from water while the water is contained under pressure.
73. The system of clause 70, further comprising a recycle line providing fluid communication from the cathode phase separator to the anode reservoir.
74. The system of clause 73, wherein the recycle line comprises a backflow prevention device.
75. The system of clause 73, wherein the recycle line has a sufficiently small diameter to prevent dissolved ozone from diffusing from the anode reservoir to the cathode phase separator.
76. The system of clause 55, wherein the cathode and anode are separated by a proton exchange membrane.
77. The system of clause 55, further comprising a pressure regulating member disposed in the gas outlet.
78. The system of clause 55, wherein the porous hydrophobic membrane allows gas to be separated from water while the water is contained under pressure.
79. The system of clause 55, wherein the anode reservoir further comprises a water outlet near the base of the anode reservoir.
80. An ozone generating and delivery system comprising:
   a plurality of electrochemical cells, each cell having an anode and a cathode; and
   an anode reservoir in communication with the anodes, the anode reservoir comprising a gas outlet port and a porous hydrophobic membrane disposed over the gas outlet port.
81. The system of clause 80, wherein the plurality of electrochemical cells are placed in a filter press arrangement.
82. The system of clause 80, wherein the anodes form a portion of the anode reservoir.
83. The system of clause 80, wherein the plurality of electrochemical cells are positioned side by side with the anodes facing the anode reservoir.
84. The system of clause 83, wherein the electrochemical cells are wired in series.
85. The system of clause 83, wherein the electrochemical cells use a common proton exchange membrane.
86. A phase separator for an electrochemical cell that provides a gas containing liquid stream, comprising:
   (a) a reservoir comprising an inlet passage for receiving the gas-containing liquid stream, a gas outlet port, a porous hydrophobic membrane disposed over the gas outlet port, and an outlet passage for returning the liquid to the electrochemical cell.
87. The phase separator of clause 86, wherein the inlet passage is a first tube and the outlet passage is a second tube.
88. The phase separator of clause 86, wherein the inlet passage and outlet passage are the same passage.
89. The phase separator of clause 88, wherein the reservoir is coupled directly to the electrochemical system along an interface that defines the passage.
90. A waste gas destruction unit for an electrochemical system producing ozone and hydrogen gases, comprising:
   (a) a first region comprising an hydrogen inlet, an oxygen source inlet and a tortuous packing;
   (b) a second region downstream of the first region, the second region comprising a hydrogen destruction catalyst;
   (c)a third region downstream of the second region, the third region comprising an ozone inlet and a tortuous packing; and
   (d) a fourth region downstream of the third region, the fourth region comprising an ozone destruction catalyst and a vent.
91. The waste gas destruction unit of clause 90, wherein the hydrogen destruction catalyst is in thermal communication with the ozone destruction catalyst.
92. The waste gas destruction unit of clause 90, wherein the hydrogen destruction catalyst is in thermal communication with an unrelated process.
93. An electrochemical method of generating and delivering ozone, comprising the steps of:
   (a) electrolyzing water in one or more electrolytic cells to generate a combination of oxygen and ozone in water at the anode and hydrogen in water at the cathode;
   (b) receiving anode water containing dissolved oxygen and ozone gases from the anode into an anode reservoir; and
   (c) separating the ozone/oxygen gas from the anode water using a porous hydrophobic membrane disposed in the anode reservoir.
94. The method of clause 93, further comprising the steps of:
   (d) receiving hydrogen gas and water from the cathode into the cathode reservoir; and
   (e) separating the hydrogen gas from the cathode water using a porous hydrophobic membrane.
95. The method of clause 94, further comprising the steps of:
   (f) recycling water from the cathode reservoir to the anode reservoir.
96. The method of clause 93, further comprising the steps of:
   (d) adding water to the anode reservoir.
97. The method of clause 93, further comprising the steps of:
   (d) adding water to a top portion of the anode reservoir; and
   (e) withdrawing the anode water containing dissolved ozone gas from a bottom portion of the anode reservoir.
98. The method of clause 93, further comprising the steps of:
   (d) depressurizing the anode reservoir to a pressure below the pressure of a water source;
   (e) allowing water from the water source to flow into the anode reservoir; and
   (f) repressurizing the anode reservoir;
99. The method of clause 93, further comprising the steps of:
   (d) controlling the pressure in the anode reservoir by restricting the gas flow out of the anode reservoir.
100. The method of clause 93, further comprising the steps of:
   (d) delivering ozone gas from the anode reservoir under pressure.
101. The method of clause 93, further comprising the steps of:
   (d) delivering the anode water from the anode reservoir under pressure.
102. The method of clause 94, further comprising the steps of:
   (f) destroying surplus ozone and hydrogen.
103. An ozone generation and delivery system comprising:
   (a) an electrochemical cell having an anode and a cathode;
   (b) a cathode reservoir in communication with the cathode; and
   (c) a cooling member disposed in thermal communication with the cathode reservoir.
104. The system of clause 103, wherein the cathode forms a portion of the cathode reservoir.
105. The system of clause 103, wherein the cathode reservoir is a cathode phase separator chamber.
106. The system of clause 105, wherein the cathode phase separator chamber includes a gas outlet port disposed in a top portion of the cathode phase separator chamber and wherein the cathode is disposed in a bottom portion of the cathode phase separator chamber.
107. The system of clause 105, wherein the cathode phase separator chamber is in fluid communication with the cathode allowing the free exchange of water and gas bubbles between the cathode and the cathode phase separator chamber.
108. The system of clause 103, further comprising an anode reservoir in fluid communication with the anode.
109. The system of clause 103, further comprising a water source in fluid communication with the cathode reservoir.
110. The system of clause 103, further comprising a water source in fluid communication through a backflow prevention device to the anode reservoir.
111. The system of clause 110, further comprising a pressure control device in the gas outlet port.
112. The system of clause 103, further comprising an anode reservoir in fluid communication with the anode.
113. The system of clause 112, wherein the anode reservoir comprises a liquid reservoir, a gas outlet port located at the top of the reservoir and a porous hydrophobic membrane disposed over the gas outlet port.
114. The system of clause 113, wherein the porous hydrophobic membrane of the anode reservoir allows gas to be separated from water while the water is contained under pressure.
115. The system of clause 112, further comprising a recycle line providing fluid communication from the cathode phase separator to the anode reservoir.
116. The system of clause 115, wherein the recycle line comprises a backflow prevention device.
117. The system of clause 115, wherein the recycle line has a sufficiently small diameter to prevent dissolved ozone from diffusing from the anode reservoir to the cathode phase separator.
118. The system of clause 103, wherein the cathode and anode are separated by a proton exchange membrane.
119. The system of clause 114, further comprising a pressure regulating member disposed in the gas outlet.
120. The system of clause 103, wherein the anode reservoir further comprises a water outlet near the base of the anode reservoir.
121. An ozone generation and delivery system comprising:
   (a) a plurality of electrochemical cells, each cell having an anode and a cathode; and
   (b) an anode reservoir in communication with the anodes, the anode reservoir comprising a gas outlet port and a porous hydrophobic membrane disposed over the gas outlet port.
122. The system of clause 121, wherein the plurality of electrochemical cells are placed in a filter press arrangement.
123. The system of clause 121, wherein the anodes form a portion of the anode reservoir.
124. An electrochemical method of generating and delivering ozone, comprising the steps of:
   (a) electrolyzing water in one or more electrolytic cells to generate ozone in water at the anode and a cathodic product in water at the cathode;
   (b) circulating water between the cathode and the cathode reservoir; and
   (c) cooling water in the cathode reservoir.
125. The method of clause 124, wherein hydrogen gas is separated from the cathode water using a porous hydrophobic membrane disposed in the cathode phase separator.
126. The method of clause 124, further comprising the steps of:
   (d) back diffusing water from the cathode through a proton exchange membrane to the anode, wherein the proton exchange membrane is disposed between the cathode and anode.
127. The method of clause 124, further comprising the steps of:
   (d) delivering ozone gas from the anode under pressure.
128. The method of clause 124, further comprising the steps of:
   (d) delivering the anode water from the anode reservoir under pressure.
129. The method of clause 125, further comprising the steps of:
   (f) destroying surplus ozone and hydrogen.
130. An electrochemical cell, comprising:
   (a) a compressible electrode;
   (b) a rigid electrode; and
   (c) a proton exchange membrane compressed between the compressible electrode and the rigid electrode.
131. The electrochemical cell of clause 130, wherein the compressible electrode and rigid electrodes contain a fluid, and wherein the fluid in the compressible electrode is under greater pressure than the fluid in the rigid electrode.
132. The electrochemical cell of clause 130, further comprising a rigid support member behind the compressible electrode reducing the compression on the compressible electrode.
133. A method of operating an electrochemical cell, comprising:
   (a) providing a reactant to an electrode at a flowrate substantially equal to consumption of the reactant; and
   (b) periodically flushing the electrode with the reactant at a flowrate substantially greater that consumption of the reactant to remove compounds accumulated on the electrode.
134. The method of clause 133 further comprising:
   (c) monitoring the flowrate of reactant into the electrode.

## Claims

1. An electrochemical cell comprising:
(a) a compressible electrode;
(b) a rigid electrode; and
(c) a proton exchange membrane compressed between the compressible electrode and rigid electrode
wherein the rigid electrode is in the form of an anode flowfield comprising
a first region formed of expanded metal sheet, and a porous metal substrate having a first side in contact with the said first region, and a second side adjacent the proton exchange membrane there being an anode catalyst between the said second side of the porous metal substrate and the proton exchange membrane,
and wherein the compressible electrode is in the form of a cathode flowfield comprising
a first region formed of expanded metal sheet, a first side of said region being in contact with a rigid perforated metal sheet, and wherein the second side of the perforated metal sheet is in contact with a sheet of compressible stainless steel felt or wool, the stainless steel felt or wool being adjacent the proton exchange membrane, there being a cathode catalyst between the stainless steel felt or wool and the proton exchange membrane.

2. An electrochemical cell according to Claim 1 wherein said first region of the anode flowfield is formed of expanded titanium, and the porous metal substrate of the anode comprises porous titanium.

3. An electrochemical cell according to Claim 1 or Claim 2 wherein the expanded metal sheet of the cathode flowfield are made from stainless steel, nickel or copper.

4. An electrochemical cell according to Claim 3 wherein the expanded sheet and the perforated metal sheet and the perforated metal sheet of the cathode flowfield are formed of stainless steel.

5. The electrolyser of any one of the preceding Claims wherein the first region of the anode flowfield comprise three rolled expanded metal sheets.

6. An electrochemical cell according to Claim 5 wherein the diamond-shaped openings of each of the three sheets are oriented 90° from each adjacent sheet.

7. An electrochemical cell according to any one of the preceding Claims wherein the first region of the cathode flowfield is formed from at least two perforated stainless steel sheets.

8. An electrochemical cell according to Claim 7 wherein the first region of the cathode flowfield is formed from three adjacent stainless steel sheets.

9. An electrochemical cell according to Claim 8 wherein the diamond-shaped openings of the three sheets are oriented 90° from each other.

10. An electrochemical cell according to any one of the preceding Claims wherein the porous metal substrate of the anode flowfield is a layer of sintered titanium.

11. An electrochemical cell according to any one of the preceding Claims wherein the anode catalyst is a layer of lead dioxide catalyst deposited on the porous metal substrate.

12. An electrochemical cell according to any one of the preceding Claims wherein the cathode catalyst is carbon fibre paper impregnated with platinum.

13. An electrochemical cell according to any one of the preceding Claims wherein the perforated metal plate of the cathode has holes therethrough which are larger than passages in the adjacent stainless steel felt and smaller than the openings in the adjacent expanded metal.
